(19)

Europäisches
Patentamt
European
Patent Office
Office européen
des brevets

(11) **EP 2 858 078 A1**

(12) **EUROPEAN PATENT APPLICATION**
published in accordance with Art. 153(4) EPC

(43) Date of publication:
**08.04.2015 Bulletin 2015/15**

(21) Application number: **12878270.3**

(22) Date of filing: **04.06.2012**

(51) Int Cl.:
**H01F 38/14** *(2006.01)*    **H02J 17/00** *(2006.01)*

(86) International application number:
**PCT/JP2012/064389**

(87) International publication number:
**WO 2013/183106 (12.12.2013 Gazette 2013/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Toyota Jidosha Kabushiki Kaisha
Toyota-shi, Aichi 471-8571 (JP)**

(72) Inventor: **ICHIKAWA, Shinji
Toyota-shi, Aichi 471-8571 (JP)**

(74) Representative: **Smith, Samuel Leonard
J A Kemp
14 South Square
Gray's Inn
London WC1R 5JJ (GB)**

(54) **POWER RECEPTION DEVICE, POWER TRANSMISSION DEVICE, AND VEHICLE**

(57)     A power reception device includes a coil (22) and a core (21) having the coil (22) wound therearound, the core (21) including a stem portion (33) extending in a direction in which the winding axis (O1) extends, and having the coil (22) wound therearound, and a magnetic pole portion (34a, 34b) formed at least at one end portion of the stem portion (33), and extending in an intersecting direction that intersects the direction in which the winding axis (O1) extends, a width of the stem portion (33) in the intersecting direction being smaller than a length of the magnetic pole portion (34a, 34b) in the intersecting direction, a first central portion positioned at a center of the magnetic pole portion (34a, 34b) in the intersecting direction and a second central portion positioned at a center of the stem portion (33) in the intersecting direction being displaced from each other in the intersecting direction.

FIG.7

**Description**

TECHNICAL FIELD

The present invention relates to a power reception device, a power transmission device, and a vehicle.

BACKGROUND ART

In recent years, due to concerns with environment, attention has been drawn to a hybrid vehicle, an electric vehicle, and the like, each of which drives driving wheels using electric power from a battery or the like.

Particularly drawing attention in recent years is wireless charging, by which such a battery included in an electrically powered vehicle can be charged in a non-contact manner without using a plug or the like.

A non-contact power feeding device described in Japanese Patent Laying-Open No. 2011-50127, for example, includes a power reception unit and a power transmission unit, each of which includes an H-shaped core, and a coil mounted on this core.

The core includes two magnetic pole portions, and a narrow coiled portion formed between these two magnetic pole portions and having the coil wound therearound.

The two aforementioned magnetic pole portions are formed such that they are axisymmetric with respect to a symmetry axis passing through the center of the narrow coiled portion and perpendicularly intersecting the two magnetic pole portions. The core is formed to have an H shape which is symmetric with respect to the aforementioned symmetry axis.

CITATION LIST

PATENT DOCUMENT

PTD 1: Japanese Patent Laying-Open No. 2011-50127

SUMMARY OF INVENTION

TECHNICAL PROBLEM

If the core is formed to have an H shape as described above, two recesses are formed by the narrow coiled portion and the magnetic pole portions. Generally, a power reception device has various devices mounted thereon which function during electric power transfer.

However, the space formed by each recess tends to be small, and it has been difficult to utilize it as a containment space for containing the mounted devices.

This has resulted in the mounted devices being disposed away from the core, which tends to cause an increase in size of the power reception device.

If the devices are disposed in each recess, the length of wiring connecting the devices together is increased. Consequently, during electric power transfer, a significant disturbance is introduced into a current flowing through the wiring due to an electromagnetic field formed around the coil.

It is noted that a power transmission device also has the same problem as the power reception device, and tends to be increased in size.

The present invention has been made in view of the problem as described above, and an object of the present invention is to provide a power reception device having a reduced size, and a vehicle including the power reception device. An object of the present invention is to also provide a power transmission device having a reduced size.

SOLUTION TO PROBLEM

A power reception device includes a coil that is formed to surround a winding axis and receives electric power in a non-contact manner from a power transmission unit provided externally, and a core having the coil wound therearound. The core includes a stem portion extending in a direction in which the winding axis extends, and having the coil wound therearound, and a magnetic pole portion formed at least at one end portion of the stem portion, and extending in an intersecting direction that intersects the direction in which the winding axis extends. A width of the stem portion in the intersecting direction is smaller than a length of the magnetic pole portion in the intersecting direction. A first central portion positioned at a center of the magnetic pole portion in the intersecting direction and a second central portion positioned at a center of the stem portion in the intersecting direction are displaced from each other in the intersecting direction.

Preferably, the power reception device further includes a device connected to the coil. The magnetic pole portion includes a first end portion and a second end portion arranged in the intersecting direction. A distance between the stem portion and the first end portion is greater than a distance between the stem portion and the second end portion. The device is disposed adjacent to the stem portion and so as to be close to the first end portion.

Preferably, the device is a capacitor connected to the coil. Preferably, the device is a rectifier.

Preferably, the device includes a capacitor connected to the coil, and a rectifier connected to the capacitor. The capacitor is adjacent to the stem portion, and the rectifier is disposed across the capacitor from the stem portion.

Preferably, the stem portion includes a third end portion and a fourth end portion arranged in the direction in which the winding axis extends. The magnetic pole portion includes a first magnetic pole portion connected to the third end portion, and a second magnetic pole portion connected to the fourth end portion. A central portion of the first magnetic pole portion in the intersecting direction and a central portion of the second magnetic pole portion in the intersecting direction are displaced toward one side of the intersecting direction relative to the second central portion.

Preferably, the power reception device further includes a power reception unit including the coil. A difference between a natural frequency of the power transmission unit and a natural frequency of the power reception unit is 10% or less of the natural frequency of the power reception unit. Preferably, the power reception device further includes a power reception unit including the coil. A coupling coefficient between the power reception unit and the power transmission unit is 0.1 or less. Preferably, the power reception device further includes a power reception unit including the coil. The power reception unit receives electric power from the power transmission unit through at least one of a magnetic field and an electric field, the magnetic field being formed between the power reception unit and the power transmission unit and oscillating at a specific frequency, the electric field being formed between the power reception unit and the power transmission unit and oscillating at the specific frequency. A power reception device according to the present invention includes a coil that is formed to surround a winding axis and receives electric power in a non-contact manner from a power transmission unit provided externally, and a core having the coil wound therearound. The core includes a stem portion having the coil wound therearound, and a magnetic pole portion formed at least at one end portion of the stem portion, and extending in an intersecting direction that intersects the direction in which the winding axis extends. A length of the stem portion in the intersecting direction is smaller than a length of the magnetic pole portion in the intersecting direction, and the magnetic pole portion is asymmetric with respect to an imaginary plane passing through the winding axis.

A vehicle according to the present invention includes a power reception device, the power reception device including a coil that is formed to surround a winding axis and receives electric power in a non-contact manner from a power transmission unit provided externally, a core having the coil wound therearound, and a device including a rectifier and connected to the coil. The core includes a stem portion extending in a direction in which the winding axis extends, and having the coil wound therearound, and a magnetic pole portion formed at an end portion of the stem portion, and extending in an intersecting direction that intersects the direction in which the winding axis extends. A length of the stem portion in the intersecting direction is smaller than a length of the magnetic pole portion in the intersecting direction. A first central portion positioned at a center of the magnetic pole portion in the intersecting direction and a second central portion positioned at a center of the stem portion in the intersecting direction are displaced from each other in the intersecting direction. The magnetic pole portion includes a first end portion and a second end portion arranged in the intersecting direction. A distance between the stem portion and the first end portion is greater than a distance between the stem portion and the second end portion. The rectifier is disposed adjacent to the stem portion in the intersecting direction, and so as to be closer to the first end portion than to the second end portion. The rectifier is disposed at a center in a width direction of the vehicle.

A vehicle according to the present invention includes a power reception device, the power reception device including a coil that is formed to surround a winding axis and receives electric power in a non-contact manner from a power transmission unit provided externally, and a core having the coil wound therearound. The core includes a stem portion extending in a direction in which the winding axis extends, and having the coil wound therearound, and a magnetic pole portion formed at an end portion of the stem portion, and extending in an intersecting direction that intersects the direction in which the winding axis extends. A length of the stem portion in the intersecting direction is smaller than a length of the magnetic pole portion in the intersecting direction. A first central portion positioned at a center of the magnetic pole portion in the intersecting direction and a second central portion positioned at a center of the stem portion in the intersecting direction are displaced from each other in the intersecting direction. The coil is disposed such that the winding axis extends in a width direction of the vehicle.

Preferably, assuming that an imaginary line passing through a center in a front-rear direction of the vehicle and extending in the width direction of the vehicle is defined as a first imaginary line, the first imaginary line and the coil overlap with each other when the coil is viewed from above the vehicle.

A vehicle according to the present invention includes a power reception device, the power reception device including a coil that is formed to surround a winding axis and receives electric power in a non-contact manner from a power transmission unit provided externally, and a core having the coil wound therearound. The core includes a stem portion extending in a direction in which the winding axis extends, and having the coil wound therearound, and a magnetic pole portion formed at an end portion of the stem portion, and extending in an intersecting direction that intersects the direction in which the winding axis extends. A length of the stem portion in the intersecting direction is smaller than a length of the magnetic pole portion in the intersecting direction. A first central portion positioned at a center of the magnetic pole portion in the intersecting direction and a second central portion positioned at a center of the stem portion in the intersecting direction are displaced from each other in the intersecting direction. The coil is disposed such that the winding axis extends in a front-rear direction of the vehicle.

Preferably, assuming that an imaginary line passing through a center in a width direction of the vehicle and extending in the front-rear direction of the vehicle is defined as a second imaginary line, the coil and the second imaginary line overlap with each other when the coil is viewed from above the vehicle.

A power transmission device according to the present invention includes a coil that is formed to surround a winding axis and transmits electric power in a non-contact manner to a power reception unit provided in a vehicle, and a core having the coil wound therearound. The core includes a stem portion extending in a direction in which the winding axis extends, and having the coil wound therearound, and a magnetic pole portion formed at least at one end portion of the stem portion, and extending in an intersecting direction that intersects the direction in which the winding axis extends. A width of the stem portion in the intersecting direction is smaller than a length of the magnetic pole portion in the intersecting direction. A third central portion positioned at a center of the magnetic pole portion in the intersecting direction and a fourth central portion positioned at a center of the stem portion in the intersecting direction are displaced from each other in the intersecting direction.

Preferably, the power transmission device further includes a device connected to the coil. The magnetic pole portion includes a fifth end portion and a sixth end portion arranged in the intersecting direction. A distance between the stem portion and the fifth end portion is greater than a distance between the stem portion and the sixth end portion. The device is disposed adjacent to the stem portion, and so as to be close to the fifth end portion. Preferably, the device is a capacitor connected to the coil.

Preferably, the stem portion includes a seventh end portion and an eighth end portion arranged in the direction in which the winding axis extends. The magnetic pole portion includes a third magnetic pole portion connected to the seventh end portion, and a fourth magnetic pole portion connected to the eighth end portion. A central portion of the third magnetic pole portion in the intersecting direction and a central portion of the fourth magnetic pole portion in the intersecting direction are displaced toward one side of the intersecting direction relative to the fourth central portion. A power transmission device according to the present invention includes a coil that is formed to surround a winding axis and transmits electric power in a non-contact manner to a power reception unit provided in a vehicle, and a core having the coil wound therearound. The core includes a stem portion extending in a direction in which the winding axis extends, and having the coil wound therearound, and a magnetic pole portion formed at least at one end portion of the stem portion, and extending in an intersecting direction that intersects the direction in which the winding axis extends. A length of the stem portion in the intersecting direction is smaller than a length of the magnetic pole portion in the intersecting direction, and the magnetic pole portion is asymmetric with respect to an imaginary plane passing through the winding axis.

ADVANTAGEOUS EFFECTS OF INVENTION

According to the power reception device and the vehicle of the present invention, the size of the power reception device can be reduced. According to the power transmission device of the present invention, the size thereof can be reduced.

BRIEF DESCRIPTION OF DRAWINGS

Fig. 1 is a schematic diagram schematically showing a power reception device, a power transmission device, and a power transfer system according to the present embodiment.
Fig. 2 is a side view showing the left side surface of an electrically powered vehicle 10.
Fig. 3 is a bottom view of electrically powered vehicle 10.
Fig. 4 is a cross-sectional view showing a power reception device 11.
Fig. 5 is an exploded perspective view of power reception device 11.
Fig. 6 is an exploded perspective view schematically showing a fixation member 27 and a ferrite core 21.
Fig. 7 is a cross-sectional view taken along line VII-VII in Fig. 4.
Fig. 8 is a cross-sectional view taken along line VIII-VIII in Fig. 7.
Fig. 9 is a perspective view showing a state in which a power reception unit 20 and a power transmission unit 56 are arranged to face each other.
Fig. 10 is a cross-sectional view of a power transmission device 50 shown in Fig. 9.

Fig. 11 shows a simulation model of the power transfer system.

Fig. 12 is a graph showing relation between power transfer efficiency and deviation in natural frequency between a power transmission unit 93 and a power reception unit 96.

Fig. 13 is a graph showing relation between the power transfer efficiency when an air gap AG is changed with natural frequency f0 being fixed and frequency f3 of current supplied to a primary coil 58.

Fig. 14 shows relation between a distance from an electric current source or magnetic current source and the strength of an electromagnetic field.

Fig. 15 is a graph showing relation between an amount of lateral displacement between power reception unit 20 and power transmission unit 56, and power transfer efficiency.

Fig. 16 is a graph showing relation between an amount of positional displacement between power reception unit 20 and power transmission unit 56, and power transfer efficiency, as a comparative example.

Fig. 17 is a plan view schematically showing a position in which power reception unit 20 is mounted.

Fig. 18 is a plan cross-sectional view showing a modification of the power transmission unit.

Fig. 19 is a plan view schematically showing a first modification of electrically powered vehicle 10 according to a second embodiment.

Fig. 20 is a plan view schematically showing the electrically powered vehicle.

Fig. 21 is a plan view schematically showing a modification of electrically powered vehicle 10 according to the second embodiment.

Fig. 22 is a plan view schematically showing electrically powered vehicle 10 according to a third embodiment.

Fig. 23 is a plan view schematically showing a modification of electrically powered vehicle 10 according to the third embodiment.

## DESCRIPTION OF EMBODIMENTS

(First Embodiment)

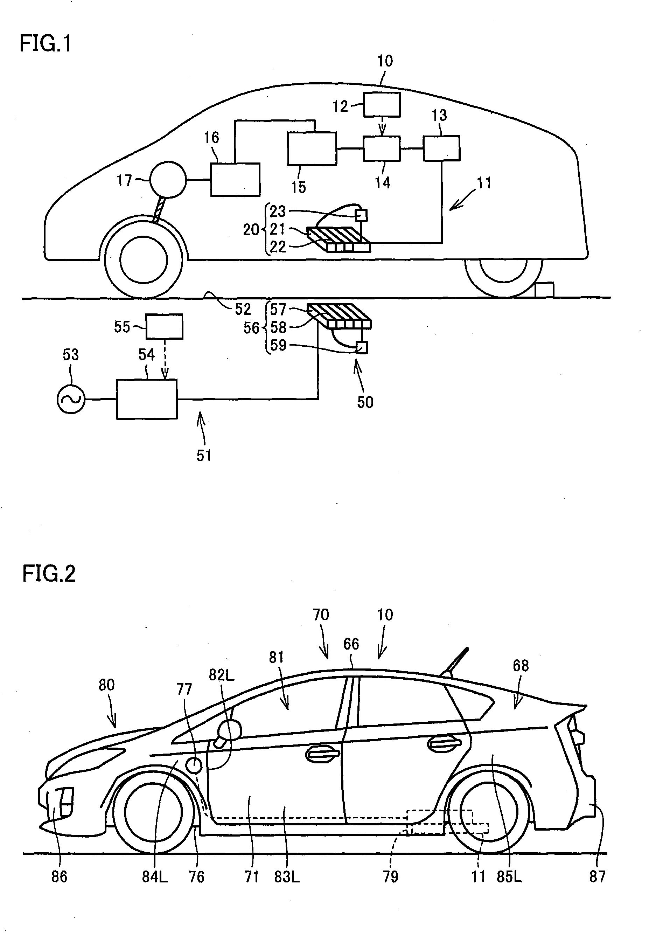

Fig. 1 is a schematic diagram schematically showing a power reception device, a power transmission device, and a power transfer system according to the present embodiment.

The power transfer system according to the first embodiment includes an electrically powered vehicle 10 including a power reception device 11, and an external power feeding device 51 including a power transmission device 50. Power reception device 11 of electrically powered vehicle 10 receives electric power mainly from power transmission device 50 when parked in a predetermined position of a parking space 52 provided with power transmission device 50.

Parking space 52 is provided with a sprag as well as lines indicating a parking position and a parking range such that electrically powered vehicle 10 is parked at the predetermined position.

External power feeding device 51 includes a high-frequency power driver 54 connected to an AC power supply 53, a control unit 55 that controls driving of high-frequency power driver 54 or the like, and power transmission device 50 connected to this high-frequency power driver 54. Power transmission device 50 includes a power transmission unit 56. Power transmission unit 56 includes a ferrite core 57, a coil (resonance coil) 58 wound around ferrite core 57, and a capacitor 59 connected to this primary coil 58. It is noted that capacitor 59 is not an essential configuration. Primary coil 58 is connected to high-frequency power driver 54.

Power transmission unit 56 includes an electric circuit formed by inductance of primary coil 58, stray capacitance of primary coil 58, and capacitance of capacitor 59.

In Fig. 1, electrically powered vehicle 10 includes power reception device 11, a rectifier 13 connected to power reception device 11, a DC/DC converter 14 connected to rectifier 13, a battery 15 connected to DC/DC converter 14, a power control unit (PCU) 16, a motor unit 17 connected to power control unit 16, and a vehicle ECU (Electronic Control Unit) 12 that controls driving of DC/DC converter 14, power control unit 16, or the like. It is noted that electrically powered vehicle 10 according to the present embodiment is a hybrid vehicle including an engine not shown in the figures, but includes a fuel cell vehicle as long as it is a vehicle driven by a motor. Electrically powered vehicle 10 is also not limited to a hybrid vehicle but may be an electric vehicle.

Rectifier 13, which is connected to power reception device 11, converts alternating current supplied from power reception device 11 into direct current, and supplies it to DC/DC converter 14.

DC/DC converter 14 adjusts the voltage of the direct current supplied from rectifier 13, and supplies it to battery 15. It is noted that DC/DC converter 14 is not an essential configuration and may be omitted. In such a case, DC/DC converter 14 can be replaced with a matching device provided between power transmission device 50 and high-frequency power driver 54 to match the impedance with external power feeding device 51.

Power control unit 16 includes a converter connected to battery 15 and an inverter connected to this converter, and the converter adjusts (boosts) the direct current supplied from battery 15 and supplies it to the inverter. The inverter converts the direct current supplied from the converter into alternating current, and supplies it to motor unit 17.

For motor unit 17, a three-phase alternating current motor or the like is employed, for example. Motor unit 17 is driven using the alternating current supplied from the inverter of power control unit 16.

It is noted that electrically powered vehicle 10 further includes an engine or a fuel cell. Motor unit 17 includes a motor generator that mainly functions as a power generator, and a motor generator that mainly functions as a motor.

Power reception device 11 includes a power reception unit 20. Power reception unit 20 includes a ferrite core 21, a secondary coil 22 wound around the outer circumferential surface of ferrite core 21, and a capacitor 23 connected to secondary coil 22. Also in power reception unit 20, capacitor 23 is not an essential configuration. Secondary coil 22 is connected to rectifier 13. Secondary coil 22 has stray capacitance. Accordingly, power reception unit 20 has an electric circuit formed by inductance of secondary coil 22 and capacitances of secondary coil 22 and capacitor 23. It is noted that capacitor 23 is not an essential configuration and can be omitted.

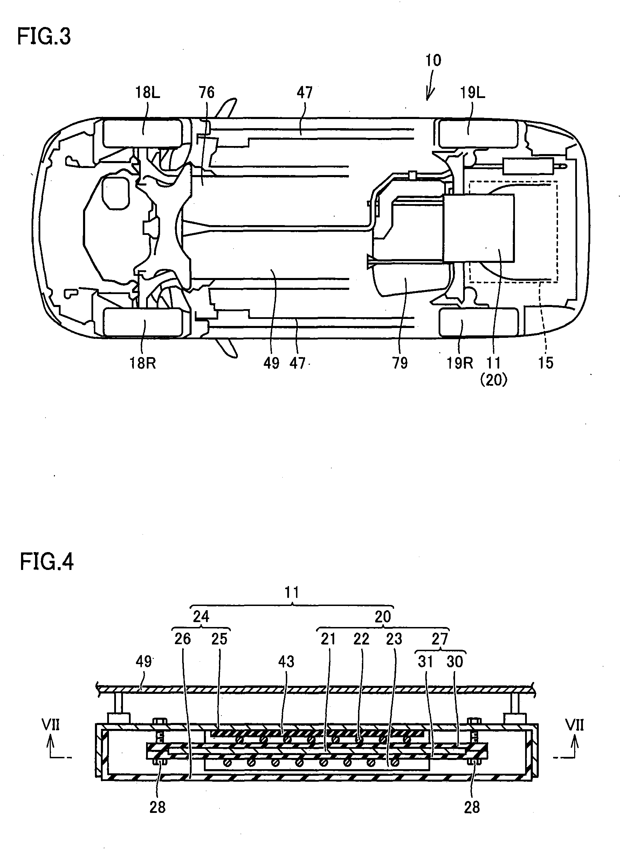

Fig. 2 is a side view showing the left side surface of electrically powered vehicle 10. Fig. 3 is a bottom view of electrically powered vehicle 10.

In Fig. 2, electrically powered vehicle 10 includes a vehicle main body 70 and wheels provided in vehicle main body 70. Formed in vehicle main body 70 are a driving compartment 80 having motor unit 17, the engine, and the like contained therein, a passenger compartment 81 capable of containing a passenger therein and disposed at a rear side relative to driving compartment 80 in the traveling direction of electrically powered vehicle 10, and a luggage compartment 68 disposed at a rear side relative to passenger compartment 81 in the traveling direction.

In left side surface 71 of electrically powered vehicle 10, a boarding opening 82L is formed to communicate with passenger compartment 81. Vehicle main body 70 includes a door 83L that opens/closes boarding opening 82L, a front fender 84L disposed at a front side relative to boarding opening 82L in the traveling direction, and a front bumper 86 disposed at a front side relative to front fender 84 in the traveling direction.

Vehicle main body 70 includes a rear fender 85L disposed at a rear side relative to boarding opening 82L in the traveling direction, and a rear bumper 87 disposed at a rear side relative to rear fender 85L in the travelling direction.

In Fig. 3, bottom surface 76 of electrically powered vehicle 10 is an area that can be seen when electrically powered vehicle 10 is viewed from a position away downwardly in the direction vertical to the ground in a state such that the wheels (tires) of electrically powered vehicle 10 are in contact with the ground. As shown in this Fig. 3, electrically powered vehicle 10 includes a front wheel 18R and a front wheel 18L that are arranged in the width direction of the vehicle, and a rear wheel 19R and a rear wheel 19L that are arranged in the width direction of the vehicle. It is noted that front wheels 18R and 18L are disposed at the front side of the vehicle relative to rear wheels 19R and 19L. Power reception unit 20 is disposed between rear wheels 19R and 19L.

Electrically powered vehicle 10 includes a floor panel 49 separating the inside of the vehicle from the outside of the vehicle, side members 47 disposed on a lower surface of floor panel 49, and cross members disposed on the lower surface of floor panel 49.

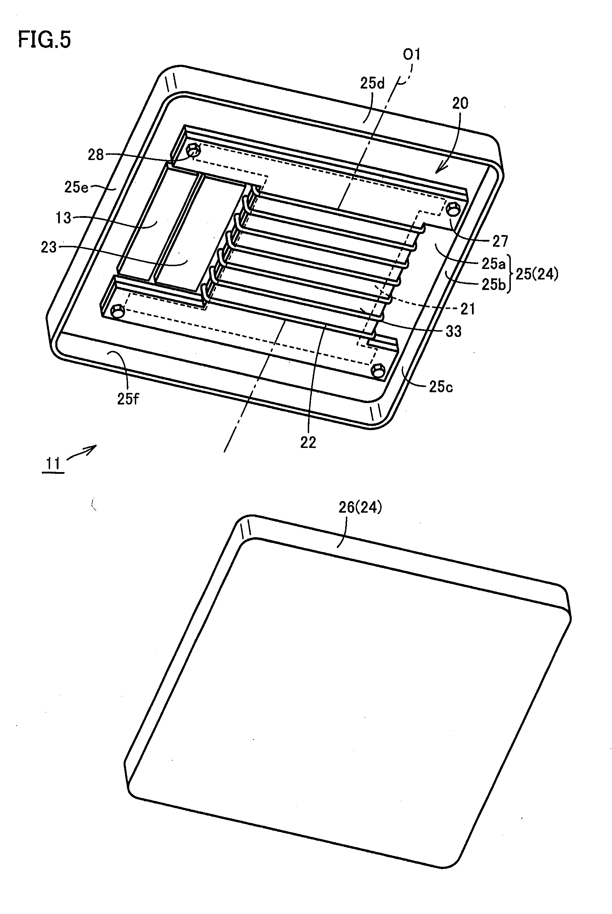

Fig. 4 is a cross-sectional view showing power reception device 11, and Fig. 5 is an exploded perspective view of power reception device 11. As shown in Figs. 4 and 5, power reception device 11 includes power reception unit 20, rectifier 13 connected to power reception unit 20, and a case 24 having power reception unit 20 and rectifier 13 contained therein.

Case 24 includes a shield 25 formed to open downwardly, and a cover portion 26 provided to close the opening of shield 25. It is noted that "downward" includes a direction from power reception unit 20 toward power transmission unit 56 facing power reception unit 20. Shield 25 and cover portion 26 form an accommodation compartment accommodating power reception unit 20 and rectifier 13. It is noted that the accommodation compartment is sealed in the first embodiment.

Shield 25 includes a top plate portion 25a, and a circumferential wall portion 25b formed to extend downwardly from the circumferential edge portion of top plate portion 25a. Circumferential wall portion 25b includes a plurality of wall portions 25c to 25f, and the plurality of wall portions 25c to 25f are connected to one another to form annular circumferential wall portion 25b. Wall portion 25c and wall portion 25e are arranged in a direction in which a winding axis O1 of secondary coil 22 extends, whereas wall portion 25d and wall portion 25f are arranged in a direction perpendicular to winding axis O1 of secondary coil 22. It is noted that the shape of shield 25 is not limited to such a shape and various types of shapes can be employed such as a polygonal shape, a circular shape, and an oval shape.

The bottom end portion of circumferential wall portion 25b forms an opening, which is closed by cover portion 26.

Power reception unit 20 includes ferrite core 21 formed to have a plate-like shape, a fixation member 27 that sandwiches ferrite core 21 from the upper and lower sides, secondary coil 22 wound around fixation member 27, and capacitor 23 connected to secondary coil 22.

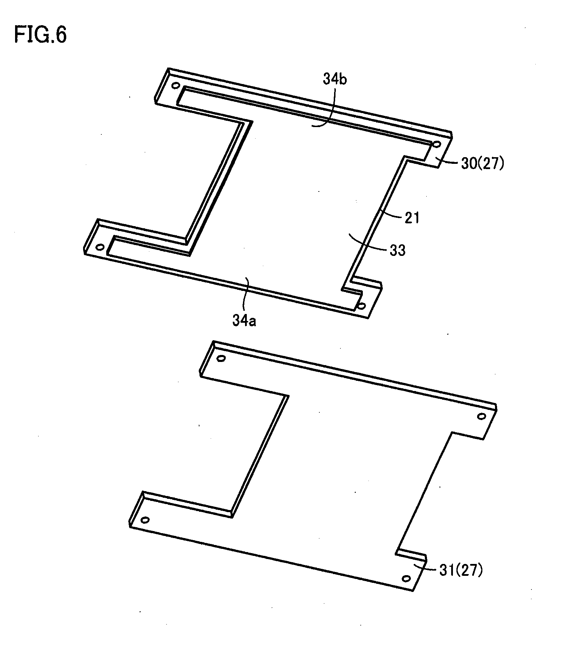

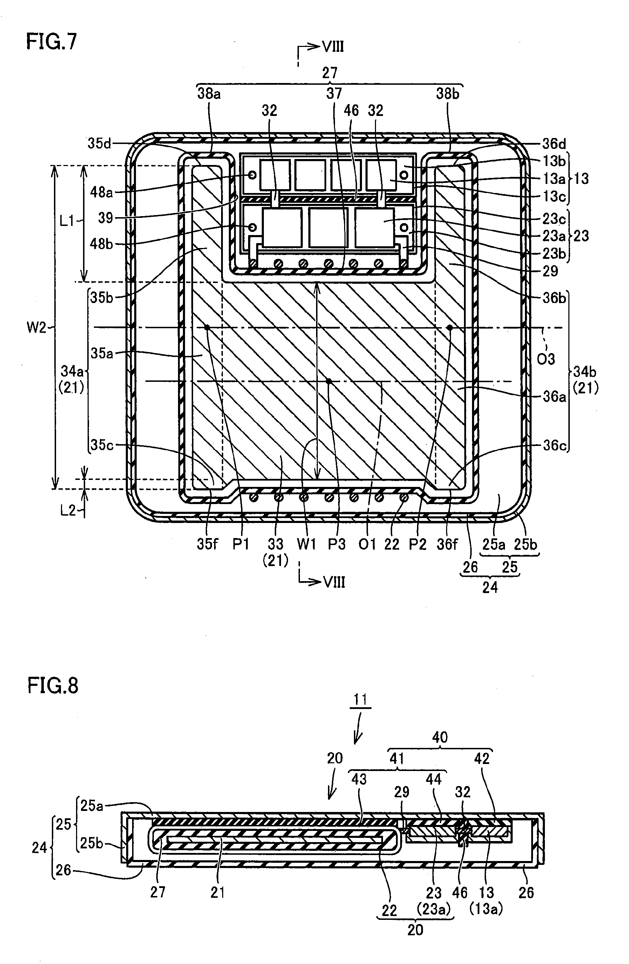

Fig. 6 is an exploded perspective view schematically showing fixation member 27 and ferrite core 21. Ferrite core 21 is disposed in fixation member 27. Fig. 7 is a cross-sectional view taken along line VII-VII in Fig. 4. As shown in Figs. 6 and 7, ferrite core 21 is contained in fixation member 27. Secondary coil 22 is wound around ferrite core 21 with fixation member 27 interposed therebetween, and secondary coil 22 is formed to surround winding axis O1. As secondary coil 22 extends from one end portion to the other end portion, secondary coil 22 is formed to be displaced in the direction in which winding axis O1 extends.

Ferrite core 21 is formed to have a plate-like shape. Ferrite core 21 includes a stem portion 33 extending in the direction in which winding axis O1 extends, a magnetic pole portion 34a formed at one end portion of stem portion 33, and a magnetic pole portion 34b formed at the other end portion of stem portion 33. Secondary coil 22 is provided to surround stem portion 33.

Magnetic pole portion 34a and magnetic pole portion 34b extend in a direction that intersects winding axis O1. In the present embodiment, magnetic pole portions 34a and 34b are formed to extend in a direction orthogonal to winding axis O1. Assuming that the width of stem portion 33 in the direction perpendicular to winding axis O1 is defined as a width W1 and the width of magnetic pole portion 34a and magnetic pole portion 34b in the direction perpendicular to winding axis O1 is defined as a width W2, width W2 is greater than width W1.

Magnetic pole portion 34a includes an extending portion 35a formed to extend from an end portion of stem portion 33 in the direction in which winding axis O1 extends, a projecting portion 35b projecting from one end of extending portion 35a, and a projecting portion 35c formed to project from the other end of extending portion 35a.

The width of extending portion 35a in the direction perpendicular to winding axis O1 is the same as width W1 of stem portion 33. Projecting portion 35b projects from extending portion 35a in the direction that intersects winding axis O1. In the example shown in Fig. 7, projecting portion 35b projects from the end portion of extending portion 35a in the direction perpendicular to winding axis O1. Projecting portion 35c is formed across extending portion 35a from projecting portion 35b, and projects from extending portion 35a in the direction that intersects winding axis O1.

Assuming that the projection length of projecting portion 35b from stem portion 33 (extending portion 35a) is defined as a length L1 and the projection length of projecting portion 35c from stem portion 33 (extending portion 35a) is defined as a length L2, length L1 is greater than length L2. Magnetic pole portion 34a includes an end portion 35d and an end portion 35f arranged in the direction in which magnetic pole portion 34a extends. It is noted that the direction in which magnetic pole portion 34a extends is the direction that intersects winding axis O1. Although the direction that intersects winding axis O1 is the direction orthogonal to winding axis O1 in the present embodiment, various directions can of course be set as the direction in which magnetic pole portion 34a extends.

Magnetic pole portion 34b is formed in the same way as magnetic pole portion 34a. Magnetic pole portion 34b includes an extending portion 36a formed to extend from an end portion of stem portion 33 in the direction in which winding axis O1 extends, a projecting portion 35b projecting from one end of extending portion 36a, and a projecting portion 36c projecting from the other end of extending portion 36a. The width of extending portion 36a in the direction perpendicular to winding axis O1 is the same as width W1 of stem portion 33. Projecting portion 36b projects from extending portion 36a in the direction that intersects winding axis O1. In the example shown in Fig. 7, projecting portion 36b projects in the direction orthogonal to winding axis O1. Projecting portion 36c projects from the end portion of extending portion 36a in the direction orthogonal to winding axis O1. The projection length of projecting portion 36b from stem portion 33 (extending portion 36a) is greater than the projection length of projecting portion 36c from stem portion 33 (extending portion 36a).

Magnetic pole portion 34b includes an end portion 36d and an end portion 36f arranged in the direction in which magnetic pole portion 34b extends.

Projecting portion 35b and projecting portion 36b face each other with a space therebetween in the direction in which winding axis O1 extends, and projecting portion 35c and projecting portion 36c face each other with a space therebetween in the direction in which winding axis O1 extends. End portion 35d of projecting portion 35b and end portion 36d of projecting portion 36b face each other in the direction in which winding axis O1 extends. End portion 35f of projecting portion 35c and end portion 36f of projecting portion 36c face each other in the direction in which winding axis O1 extends.

Assume that a central portion of magnetic pole portion 34a in the direction in which magnetic pole portion 34a extends (the direction orthogonal to winding axis O1) is defined as a central portion P1, and a central portion of magnetic pole portion 34b in the direction in which magnetic pole portion 34b extends (the direction orthogonal to winding axis O1) is defined as a central portion P2. An imaginary straight line passing through central portion P1 and central portion P2 is defined as an imaginary line 03, and a central portion of stem portion 33 in the direction perpendicular to winding axis O1 is defined as a central portion P3.

As is also clear from Fig. 7, central portion P1 is displaced from central portion P3 toward one side of the direction orthogonal to winding axis O1. Likewise, central portion P2 is displaced from central portion P3 toward one side of the direction orthogonal to (that intersects) winding axis O1. Specifically, central portion P1 and central portion P2 are displaced toward end portions 35d and 36d, respectively, relative to central portion P3. Here, the "one side of the direction orthogonal to (that intersects) winding axis O1" is explained. The direction orthogonal to winding axis O1 includes a first direction from central portions P1 and P2 toward end portions 35d and 36d (a direction displaced from winding axis O1 by 90 degrees in the counterclockwise direction), and a second direction from central portions P1 and P2 toward end portions 35f and 36f (a direction displaced from winding axis O1 by 270 degrees in the counterclockwise direction). The "one side of the direction orthogonal to (that intersects) winding axis O1" refers to either the first direction or the second direction described above. In the present embodiment, central portions P1 and P2 are located in the first direction from central portion P3 toward end portions 35d and 36d, respectively. In this way, magnetic pole portions 34a and 34b are formed such that they are asymmetric with respect to an imaginary plane passing through winding axis O1.

Accordingly, a recess defined by projecting portion 35b, stem portion 33 and projecting portion 36b is larger than a recess defined by projecting portion 35c, stem portion 33 and projecting portion 36c.

As shown in Fig. 6, fixation member 27 includes an insulation piece 30 disposed at the upper surface side of ferrite core 21, and an insulation piece 31 disposed at the lower surface side of ferrite core 21. As shown in Figs. 4 and 5, insulation piece 30 and insulation piece 31 are integrated with each other by a fixation member 28 such as a bolt, and fixed to top plate portion 25a of shield 25.

As shown in Fig. 7, fixation member 27 includes a coil wound portion 37 covering stem portion 33 of ferrite core 21, a wide portion 38a formed at one end portion of coil wound portion 37 to cover magnetic pole portion 34a, and a wide portion 38b formed at the other end portion of coil wound portion 37 to cover magnetic pole portion 34b. Secondary coil 22 is wound around the outer circumferential surface of coil wound portion 37.

Coil wound portion 37, wide portion 38a, and wide portion 38b form a recess 39. Rectifier 13 and capacitor 23 are disposed in recess 39, with an insulation member 46 disposed between rectifier 13 and capacitor 23.

Capacitor 23 is disposed adjacent to stem portion 33, and capacitor 23 is disposed so as to be close to end portions 35d and 36d. Capacitor 23 and secondary coil 22 are connected together by a bus bar 29.

Since capacitor 23 and secondary coil 22 are adjacent to each other, bus bar 29 has a small length. Thus, introduction of a disturbance into a current flowing through bus bar 29 due to an electromagnetic field formed around secondary coil 22 during electric power transfer can be suppressed.

Capacitor 23 includes a case 23c, a substrate 23b disposed in case 23c, and elements 23a mounted on a main surface of substrate 23b. Elements 23a are, for example, ceramic capacitors.

Rectifier 13 is disposed across capacitor 23 from stem portion 33. Rectifier 13 and capacitor 23 are connected together by a bus bar 32. Rectifier 13 includes a case 13c, a substrate 13b disposed in case 13c, and an element 13a mounted on a main surface of substrate 13b. Element 13a is, for example, a transistor or a diode.

Insulation member 46 is disposed between case 23c of capacitor 23 and case 13c of rectifier 13. Insulation member 46 is provided with a hole portion in which bus bar 32 is inserted.

Since insulation member 46 is sandwiched between capacitor 23 and rectifier 13, insulation between capacitor 23 and rectifier 13 is ensured. On the other hand, since insulation member 46 is sandwiched between capacitor 23 and rectifier 13, the distance between rectifier 13 and capacitor 23 is reduced. Accordingly, the length of bus bar 32 connecting rectifier 13 and capacitor 23 together can be reduced. By reducing the length of bus bar 32, the significant effect of the electromagnetic field formed around secondary coil 22 on a current flowing through bus bar 32 can be reduced.

Fig. 8 is a cross-sectional view taken along line VIII-VIII in Fig. 7. As shown in Fig. 8, power reception device 11 includes an insulation member 40. Insulation member 40 includes an insulation member for power reception unit 41 that ensures insulation between shield 25 and power reception unit 20, and an insulation member for device 42 that ensures insulation between rectifier 13 and shield 25.

Insulation member for power reception unit 41 includes an insulation member for coil 43 disposed between secondary coil 22 and top plate portion 25a, and an insulation member for capacitor 44 disposed between capacitor 23 and top plate portion 25a.

Power reception device 11 thus formed is provided at the bottom surface 76 side of electrically powered vehicle 10 as shown in Fig. 3. Various types of methods can be employed to fix power reception device 11. For example, power reception device 11 may be suspended from side members 47 and the cross members. Alternatively, power reception device 11 may be fixed to floor panel 49.

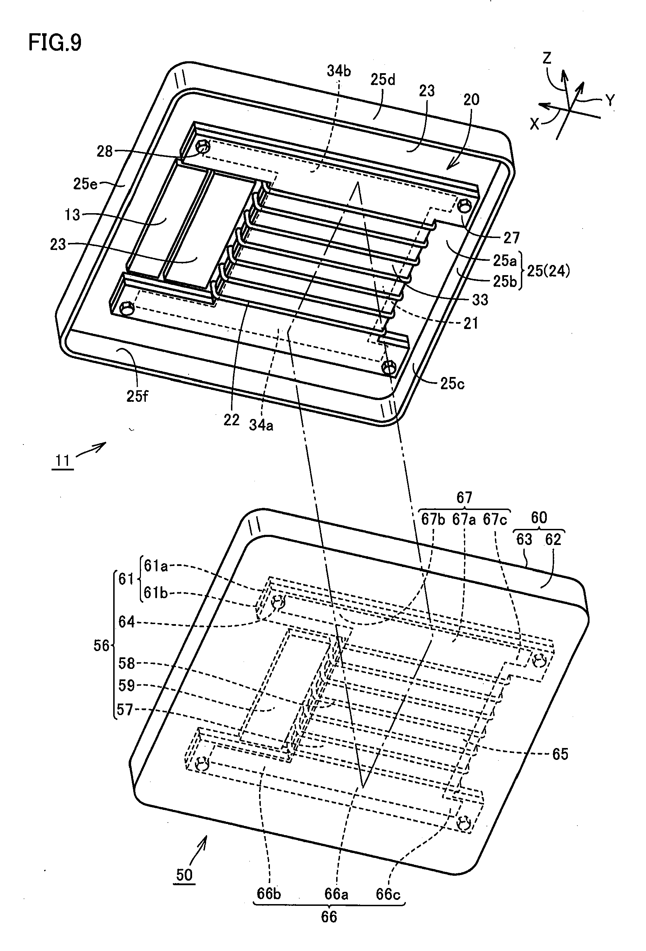

Fig. 9 is a perspective view showing a state in which power reception unit 20 and power transmission unit 56 are arranged to face each other. It is noted that cover portion 26 provided in power reception device 11 is not shown in Fig. 9.

As shown in Fig. 9, during electric power transfer, power reception unit 20 and power transmission unit 56 are arranged to face each other with an air gap therebetween.

Power transmission unit 56 includes power transmission unit 56, and a case 60 having power transmission unit 56 contained therein. Power transmission unit 56 includes a fixation member 61 contained in case 60, ferrite core 57 contained in fixation member 61, primary coil 58 attached onto the outer circumferential surface of fixation member 61, and capacitor 59 contained in case 60.

Case 60 includes a shield 62 made of a metal material such as copper, and a cover member 63 made of a resin and provided on shield 62.

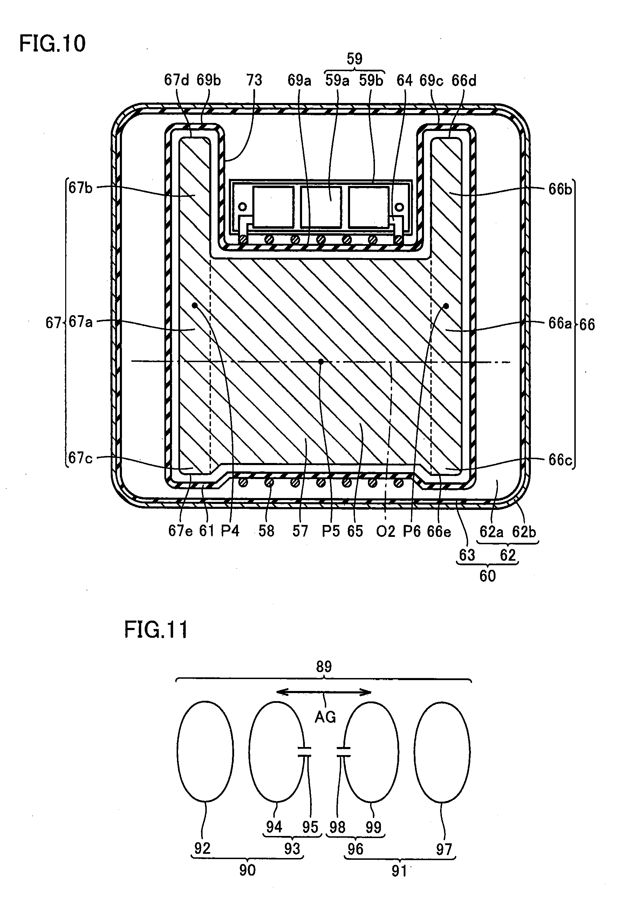

Fig. 10 is a cross-sectional view of power transmission device 50 shown in Fig. 9. As shown in Figs. 10 and 9, shield 62 includes a bottom surface portion 62a, and a circumferential wall portion 62b formed to have an annular shape rising upwardly from the outer circumferential edge of bottom surface portion 62a, and circumferential wall portion 62b has an upper end portion extending in an annular manner to provide an opening that opens upwardly. The term "upward" includes a direction from power transmission unit 56 toward power reception unit 20 facing power transmission unit 56.

Cover member 63 is formed to close the opening formed by the upper end portion of the circumferential wall portion of shield 62.

Cover member 63 and shield 62 form an accommodation compartment accommodating power transmission unit 56. This accommodation compartment is sealed with cover member 63 and shield 62, to prevent entry of outside rainwater and the like into power transmission device 50.

Primary coil 58 is wound around fixation member 61, and ferrite core 57 is contained in fixation member 61. As shown in Fig. 9, fixation member 61 includes an insulation piece 61a disposed at the upper surface side of ferrite core 57, and an insulation piece 61b disposed at the lower surface side of ferrite core 57.

In Fig. 10, primary coil 58 is formed to surround a winding axis 02. As primary coil 58 extends from one end portion to the other end portion, primary coil 58 is formed to be displaced in a direction in which winding axis 02 extends.

Ferrite core 57 is formed to have a plate-like shape. Ferrite core 57 includes a stem portion 65 having primary coil 58 wound therearound, a magnetic pole portion 66 formed at one end of stem portion 65, and a magnetic pole portion 67 formed at the other end of stem portion 65.

The width of stem portion 65 in a direction perpendicular to winding axis 02 is greater than the width of magnetic pole portion 67 in the direction perpendicular to winding axis 02 and the width of magnetic pole portion 66 in the direction perpendicular to winding axis 02.

Magnetic pole portion 67 includes an extending portion 67a extending continuously from stem portion 65 and projecting from stem portion 65 in the direction in which winding axis 02 extends, a projecting portion 67b projecting from one end portion of extending portion 67a in a direction that intersects (e.g., the direction perpendicular to) winding axis 02, and a projecting portion 67c projecting from the other end portion of extending portion 67a in the direction that intersects (e.g., the direction perpendicular to) winding axis 02. Magnetic pole portion 67 includes an end portion 67d and an end portion 67e arranged in a direction orthogonal to winding axis 02.

The width of extending portion 67a in the direction perpendicular to winding axis 02 is substantially the same as the width of stem portion 65 in the direction perpendicular to winding axis 02. The projection length of projecting portion 67b from extending portion 67a or stem portion 65 is greater than the projection length of projecting portion 67c from extending portion 67a or stem portion 65.

Assuming that a central portion of magnetic pole portion 67 in the direction in which magnetic pole portion 67 extends (the direction perpendicular to winding axis O2) is defined as a central portion P4, and a central portion of stem portion 65 in the direction perpendicular to winding axis 02 is defined as a central portion P5, central portion P4 and central portion P5 are displaced from each other in the direction perpendicular to winding axis 02.

Magnetic pole portion 66 is formed in the same way as magnetic pole portion 67. Magnetic pole portion 66 includes an extending portion 66a extending continuously from stem portion 65 and projecting in the direction in which winding axis 02 extends, a projecting portion 66b projecting from one end of extending portion 66a in the direction that intersects winding axis 02 (e.g., the direction orthogonal to winding axis O2), and a projecting portion 66c projecting from the other end of extending portion 66a in the direction that intersects winding axis 02 (e.g., the direction orthogonal to winding axis 02). Magnetic pole portion 66 includes an end portion 66d and an end portion 66e arranged in the direction that intersects winding axis O.

The width of extending portion 66a in the direction perpendicular to winding axis 02 is substantially the same as the width of stem portion 65 in the direction perpendicular to winding axis O2.

The projection length of projecting portion 66b from extending portion 66a or stem portion 65 is greater than the projection length of projecting portion 66c from extending portion 66a or stem portion 65. Projecting portion 66b and projecting portion 67b face each other in the direction in which winding axis 02 extends, and projecting portion 66c and projecting portion 67c face each other in the direction in which winding axis 02 extends. End portion 67d of magnetic pole portion 67 and end portion 66d of magnetic pole portion 66 are arranged in the direction in which winding axis 02 extends. End portion 67e and end portion 66e are arranged in the direction in which winding axis 02 extends.

Assuming that a central portion of magnetic pole portion 66 in the direction perpendicular to winding axis 02 is defined as a central portion P6, central portion P6 and central portion P5 are displaced from each other in the direction perpendicular to winding axis 02. Specifically, central portions P4 and P6 are displaced toward end portions 67d and 66d, respectively, relative to central portion P5. In this way, magnetic pole portions 67 and 66 are formed such that they are asymmetric with respect to an imaginary plane passing through winding axis 02.

In Fig. 9, fixation member 61 includes an insulation piece 61 a disposed at the upper surface side of ferrite core 57, and an insulation piece 61b disposed at the lower surface side of ferrite core 57.

Since ferrite core 57 is sandwiched between insulation piece 61a and insulation piece 61b, ferrite core 57 is protected.

In Fig. 10, fixation member 61 includes a coil wound portion 69a covering stem portion 65, a wide portion 69b covering magnetic pole portion 67, and a wide portion 69c covering magnetic pole portion 66.

Wide portion 69b is formed at one end portion of coil wound portion 69a, and projects in the direction that intersects winding axis 02. Wide portion 69c is formed at the other end portion, and projects in the direction that intersects winding axis 02.

Coil wound portion 69a, wide portion 69b, and wide portion 69c form a recess 73. Recess 73 is formed by fitting the outer periphery of fixation member 61 to the outer peripheries of projecting portion 66b, stem portion 65 and projecting portion 66b.

Capacitor 59 is disposed in recess 73. In this way, capacitor 59 is disposed adjacent to stem portion 65, and capacitor 59 is disposed so as to be close to end portions 67d and 66d. By forming recess 73 with projecting portion 67b, stem portion 65, and projecting portion 66b, and disposing the device in recess 73 in this manner, dead space can be effectively utilized. Consequently, the size of power transmission device 50 can be reduced.

Capacitor 59 includes a case 59c, a substrate 59b contained in case 59c and fixed to bottom surface portion 62a, and elements 59a mounted on a main surface of substrate 59b. Capacitor 59 and primary coil 58 are connected together by a bus bar 64.

Since capacitor 59 is disposed adjacent to stem portion 65, the length of bus bar 64 can be reduced. Thus, introduction of a disturbance into a current flowing through bus bar 64 can be suppressed.

In Fig. 1, in the power transfer system according to the present embodiment, a difference between the natural frequency of power transmission unit 56 and the natural frequency of power reception unit 20 is 10% or less of the natural frequency of power reception unit 20 or power transmission unit 56. By setting the natural frequency of each of power transmission unit 56 and power reception unit 20 to fall within such a range, power transfer efficiency can be improved. Meanwhile, if the difference in natural frequency becomes larger than 10% of the natural frequency of power reception unit 20 or power transmission unit 56, the power transfer efficiency becomes less than 10%, which results in problems such as a long charging time for battery 15.

Here, when no capacitor 59 is provided, the expression "natural frequency of power transmission unit 56" is intended to mean an oscillation frequency at which the electric circuit formed by the inductance of primary coil 58 and the capacitance of primary coil 58 freely oscillates. When capacitor 59 is provided, the expression "natural frequency of power transmission unit 56" is intended to mean an oscillation frequency at which the electric circuit formed by the capacitances of primary coil 58 and capacitor 59 and the inductance of primary coil 58 freely oscillates. In the above-described electric circuit, the natural frequency when the damping force and the electric resistance are set at zero or substantially zero is also called "resonance frequency of power transmission unit 56."

Likewise, when no capacitor 23 is provided, the expression "natural frequency of power reception unit 20" is intended to mean an oscillation frequency at which the electric circuit formed by the inductance of secondary coil 22 and the capacitance of secondary coil 22 freely oscillates. When capacitor 23 is provided, the expression "natural frequency of power reception unit 20" is intended to mean an oscillation frequency at which the electric circuit formed by the capacitances of secondary coil 22 and capacitor 23 and the inductance of secondary coil 22 freely oscillates. In the above-described electric circuit, the natural frequency when the damping force and the electric resistance are set at zero or substantially zero is also called "resonance frequency of power reception unit 20."

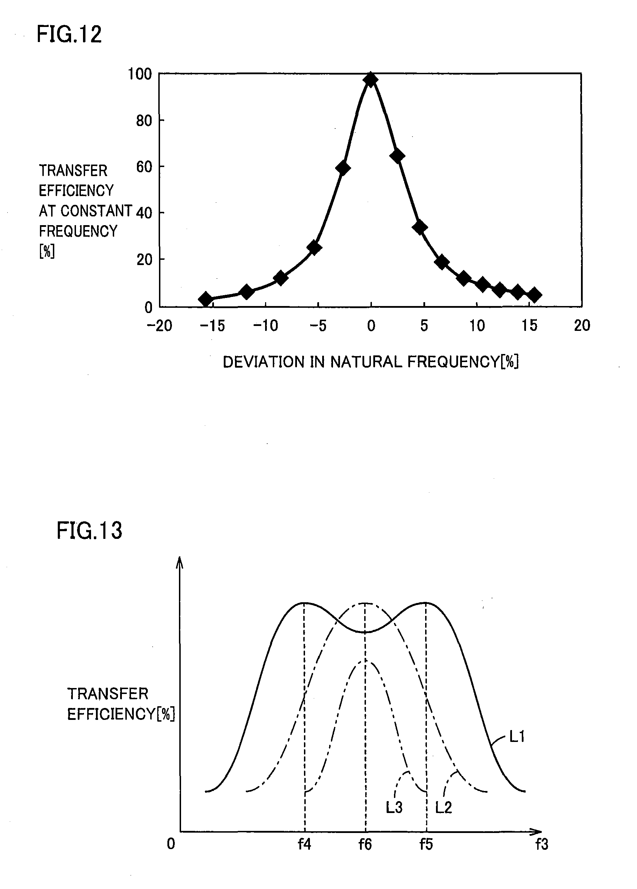

With reference to Figs. 11 and 12, the following describes a result of simulation in which relation is analyzed between the difference in natural frequency and the power transfer efficiency. Fig. 11 shows a simulation model of the power transfer system. The power transfer system includes a power transmission device 90 and a power reception device 91. Power transmission device 90 includes a coil 92 (electromagnetic induction coil) and a power transmission unit 93. Power transmission unit 93 includes a primary coil 94 (resonance coil) and a capacitor 95 provided in primary coil 94.

Power reception device 91 includes a power reception unit 96 and a coil 97 (electromagnetic induction coil). Power reception unit 96 includes a secondary coil 99 and a capacitor 98 connected to secondary coil 99 (resonance coil).

Assume that the inductance of primary coil 94 is inductance Lt and the capacitance of capacitor 95 is capacitance C 1. Assume that the inductance of secondary coil 99 is inductance Lr and the capacitance of capacitor 98 is capacitance C2. By setting each of the parameters in this way, natural frequency f1 of power transmission unit 93 is indicated by the following formula (1) and natural frequency f2 of power reception unit 96 is indicated by the following formula (2):

$$f1 = 1/\{2\pi \, (Lt \times C1)^{1/2}\} \, ... \, (1)$$

$$f2 = 1/\{2\pi \, (Lr \times C2)^{1/2}\} \, ... \, (2)$$

Here, Fig. 12 shows relation between the power transfer efficiency and the deviation in natural frequency between power transmission unit 93 and power reception unit 96 when only inductance Lt is changed with inductance Lr and capacitances C1, C2 being fixed. In this simulation, a relative positional relation between primary coil 94 and secondary coil 99 is fixed, and the frequency of current supplied to power transmission unit 93 is constant.

In the graph shown in Fig. 12, the horizontal axis represents the deviation (%) in natural frequency whereas the vertical axis represents the transfer efficiency (%) at the constant frequency. The deviation (%) in natural frequency is indicated by the following formula (3):

$$(\text{Deviation in natural frequency}) = \{(f1 - f2)/f2\} \times 100 \ (\%) \ ... \ (3)$$

As apparent also from Fig. 12, when the deviation (%) in natural frequency is $\pm 0\%$, the power transfer efficiency is close to 100%. When the deviation (%) in natural frequency is $\pm 5\%$, the power transfer efficiency is 40%. When the deviation (%) in natural frequency is $\pm 10\%$, the power transfer efficiency is 10%. When the deviation (%) in natural frequency is $\pm 15\%$, the power transfer efficiency is 5%. Thus, it is understood that the power transfer efficiency can be improved by setting the natural frequency of each of the power transmission unit and the power reception unit such that the absolute value (difference in natural frequency) of the deviation (%) in natural frequency falls within a range of 10% or less of the natural frequency of power reception unit 96. Further, it is understood that the power transfer efficiency can be more improved by setting the natural frequency of each of the power transmission unit and the power reception unit such that the absolute value of the deviation (%) in natural frequency falls within a range of 5% or less of the natural frequency of power reception unit 96. It is noted that electromagnetic field analysis software (JMAG® provided by JSOL Corporation) is employed as simulation software.

The following describes an operation of the power transfer system according to the present embodiment.

In Fig. 1, primary coil 58 is supplied with AC power from high-frequency power driver 54. On this occasion, the electric power is supplied such that the alternating current flowing through primary coil 58 has a specific frequency.

When the current having the specific frequency flows through primary coil 58, an electromagnetic field, which oscillates at the specific frequency, is formed around primary coil 58.

Secondary coil 22 is disposed in a predetermined range from primary coil 58 and receives electric power from the electromagnetic field formed around primary coil 58.

In the present embodiment, helical coils are employed for secondary coil 22 and primary coil 58. Accordingly, a magnetic field and an electric field, which oscillate at the specific frequency, are formed around primary coil 58 and secondary coil 22 receives electric power mainly from the magnetic field.

Here, the following describes the magnetic field formed around primary coil 58 and having the specific frequency. The "magnetic field having the specific frequency" is typically relevant to the power transfer efficiency and the frequency of current supplied to primary coil 58. First described is relation between the power transfer efficiency and the frequency of current supplied to primary coil 58. The power transfer efficiency when transferring electric power from primary coil 58 to secondary coil 22 is changed depending on various factors such as a distance between primary coil 58 and secondary coil 22. For example, the natural frequencies (resonance frequencies) of power transmission unit 56 and power reception unit 20 are assumed as natural frequency f0, the frequency of current supplied to primary coil 58 is assumed as frequency f3, and the air gap between secondary coil 22 and primary coil 58 is assumed as air gap AG.

Fig. 13 is a graph indicating relation between the power transfer efficiency when air gap AG is changed with natural frequency f0 being fixed and frequency f3 of current supplied to primary coil 58.

In the graph shown in Fig. 13, the horizontal axis represents frequency f3 of the current supplied to primary coil 58 whereas the vertical axis represents the power transfer efficiency (%). An efficiency curve L1 schematically represents relation between the power transfer efficiency when air gap AG is small and frequency f3 of the current supplied to primary coil 58. As indicated by efficiency curve L1, when air gap AG is small, peaks of the power transfer efficiency appear at frequencies f4, f5 (f4 < f5). When air gap AG is made larger, the two peaks at which the power transfer efficiency becomes high are changed to come closer to each other. Then, as indicated by an efficiency curve L2, when air gap AG is made larger than a predetermined distance, one peak of the power transfer efficiency appears. The peak of the power transfer efficiency appears when the current supplied to primary coil 58 has a frequency f6. When air gap AG is made further larger from the state of efficiency curve L2, the peak of the power transfer efficiency becomes smaller as indicated by an efficiency curve L3.

For example, as a technique of improving the power transfer efficiency, the following first technique can be considered. The first technique is to change a characteristic of the power transfer efficiency between power transmission unit 56 and power reception unit 20 by changing the capacitances of capacitor 59 and capacitor 23 in accordance with air gap AG with the frequency of the current supplied to primary coil 58 shown in Fig. 1 being constant. Specifically, with the frequency of the current supplied to primary coil 58 being constant, the capacitances of capacitor 59 and capacitor 23 are adjusted to attain a peak of the power transfer efficiency. In this technique, irrespective of the size of air gap AG, the frequency of the current flowing through primary coil 58 and secondary coil 22 is constant. It is noted that as the technique of changing the characteristic of the power transfer efficiency, the following techniques can be also employed: a technique of using a matching device provided between power transmission device 50 and high-frequency power driver 54; and a technique of using converter 14.

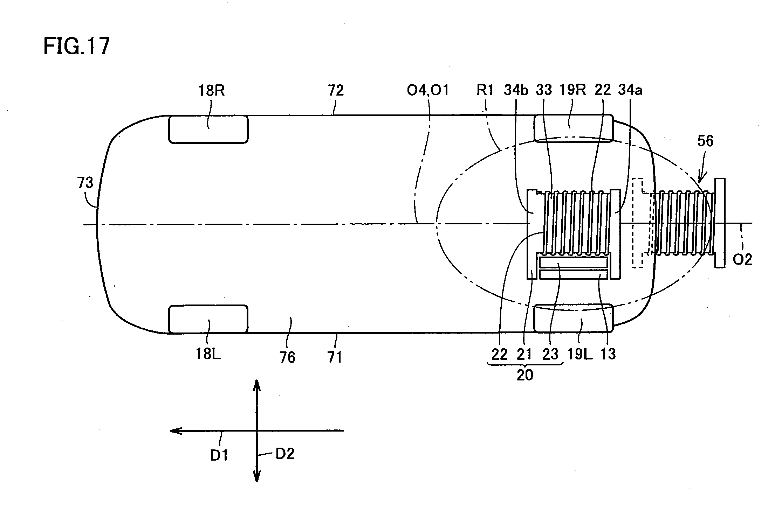

Meanwhile, a second technique is a technique of adjusting, based on the size of air gap AG, the frequency of the current supplied to primary coil 58. For example, in Fig. 17, when the power transfer characteristic corresponds to efficiency curve L1, primary coil 58 is supplied with current having frequency f4 or frequency f5. On the other hand, when the frequency characteristic corresponds to efficiency curve L2 or L3, primary coil 58 is supplied with current having frequency f6. In this case, the frequency of the current flowing through each of primary coil 58 and secondary coil 22 is changed in accordance with the size of air gap AG.

In the first technique, the frequency of the current flowing through primary coil 58 becomes a fixed, constant frequency. In the second technique, the frequency thereof flowing through primary coil 58 becomes a frequency appropriately changed according to air gap AG. With the first technique, the second technique, or the like, primary coil 58 is supplied with current having a specific frequency set to attain high power transfer efficiency. Because the current having the specific frequency flows through primary coil 58, a magnetic field (electromagnetic field), which oscillates at the specific frequency, is formed around primary coil 58. Power reception unit 20 receives electric power from power transmission unit 56 via the magnetic field formed between power reception unit 20 and power transmission unit 56 and oscillating at the specific frequency. Therefore, "the magnetic field oscillating at the specific frequency" is not necessarily a magnetic field having a fixed frequency. It is noted that in the above-described example, the frequency of the current supplied to primary coil 58 is set based on air gap AG, but the power transfer efficiency is also changed according to other factors such as a deviation in the horizontal direction between primary coil 58 and secondary coil 22, so that the frequency of the current supplied to primary coil 58 may be adjusted based on the other factors.

It is to be also noted that the example employing the helical coil as the resonance coil has been illustrated, but when an antenna such as a meander line antenna is employed as the resonance coil, an electric field having the specific frequency is formed around primary coil 58 as a result of flow of the current having the specific frequency through primary coil 58. Through this electric field, electric power is transferred between power transmission unit 56 and power reception unit 20.

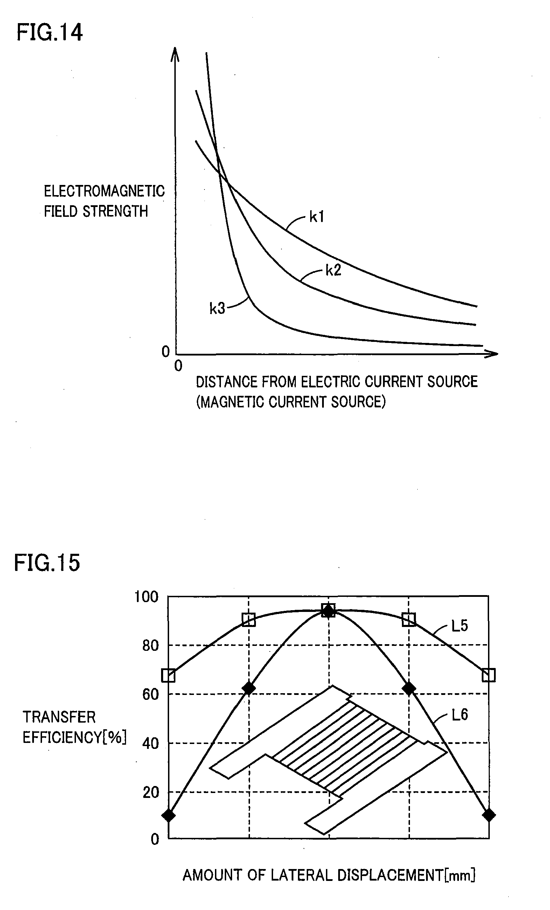

In the power transfer system according to the present embodiment, efficiency in power transmission and power reception is improved by employing a near field (evanescent field) in which an "electrostatic magnetic field" of the electromagnetic field is dominant. Fig. 14 shows relation between a distance from the electric current source or magnetic current source and the strength of the electromagnetic field. Referring to Fig. 14, the electromagnetic field is constituted of three components. A curve k1 represents a component in inverse proportion to the distance from the wave source, and is referred to as "radiation electromagnetic field." A curve k2 represents a component in inverse proportion to the square of the distance from the wave source, and is referred to as "induction electromagnetic field." A curve k3 represents a component in inverse proportion to the cube of the distance from the wave source, and is referred to as "electrostatic magnetic field." Assuming that the wavelength of the electromagnetic field is represented by "$\lambda$", $\lambda/2\pi$ represents a distance in which the strengths of the "radiation electromagnetic field," the "induction electromagnetic field," and the "electrostatic magnetic field" are substantially the same.

The "electrostatic magnetic field" is a region in which the strength of the electromagnetic wave is abruptly decreased as the distance is farther away from the wave source. In the power transfer system according to the present embodiment, the near field (evanescent field), in which this "electrostatic magnetic field" is dominant, is utilized for transfer of energy (electric power). In other words, by resonating power transmission unit 56 and power reception unit 20 (for example, a pair of LC resonant coils) having close natural frequencies in the near field in which the "electrostatic magnetic field" is dominant, the energy (electric power) is transferred from power transmission unit 56 to the other side, i.e., power reception unit 20. This "electrostatic magnetic field" does not propagate energy to a distant place. Hence, the resonance method allows for electric power transmission with less energy loss as compared with the electromagnetic wave in which the "radiation electromagnetic field" propagating energy to a distance place is utilized to transfer energy (electric power).

Thus, in this power transfer system, by resonating the power transmission unit and the power reception unit with each other through the electromagnetic field, electric power is transmitted in a non-contact manner between the power transmission unit and the power reception unit. The electromagnetic field thus formed between the power reception unit and the power transmission unit may be called, for example, "near field resonance coupling field." Further, a coupling coefficient $\kappa$ between the power transmission unit and the power reception unit is about 0.3 or less, preferably, 0.1 or less, for example. Coupling coefficient $\kappa$ may also fall within a range of about 0.1 to about 0.3. Coupling coefficient $\kappa$ is not limited to such a value, and various values to attain excellent electric power transfer can be employed.

The coupling between power transmission unit 56 and power reception unit 20 during electric power transfer in the present embodiment is called, for example, "magnetic resonance coupling," "magnetic field resonance coupling," "magnetic field resonance coupling," "near field resonance coupling," "electromagnetic field resonance coupling," or "electric field resonance coupling."

The term "electromagnetic field resonance coupling" is intended to indicate coupling including any of the "magnetic resonance coupling," the "magnetic field resonance coupling," and the "electric field resonance coupling."

Each of primary coil 58 of power transmission unit 56 and secondary coil 22 of power reception unit 20 as described in the present specification employs an antenna having a coil shape, so that power transmission unit 56 and power reception unit 20 are coupled to each other mainly by a magnetic field. Thus, power transmission unit 56 and power reception unit 20 are coupled to each other by means of the "magnetic resonance coupling" or the "magnetic field resonance coupling."

It is noted that an antenna such as a meander line antenna can be employed as primary coil 58, 22, for example. In this case, power transmission unit 56 and power reception unit 20 are coupled to each other mainly through electric field. On this occasion, power transmission unit 56 and power reception unit 20 are coupled to each other by means of the "electric field resonance coupling."

In Fig. 9, when transferring electric power between power reception unit 20 and power transmission unit 56, primary coil 58 is supplied with alternating current having a predetermined frequency.

By supplying the predetermined alternating current to primary coil 58, an electromagnetic field oscillating at a predetermined frequency is formed around primary coil 58. Then, secondary coil 22 receives electric power from the electromagnetic field. Moreover, a magnetic path is formed between power reception unit 20 and power transmission unit 56.

The magnetic path passes through magnetic pole portion 34b, stem portion 33, magnetic pole portion 34a, the air gap, magnetic pole portion 66, stem portion 65, magnetic pole portion 67, and the air gap.

Fig. 15 is a graph showing relation between an amount of lateral displacement between power reception unit 20 and power transmission unit 56, and power transfer efficiency. Here, the direction in which winding axis O1 shown in Fig. 9 extends is defined as a Y-axis direction. The direction perpendicular to winding axis O1 is defined as an X-axis direction. A direction in which power reception unit 20 and power transmission unit 56 are vertically apart form each other is defined as a Z-axis direction.

In Fig. 15, a curve L5 represents relation between an amount of positional displacement between power reception unit 20 and power transmission unit 56 in the X-axis direction, and the power transfer efficiency. A curve L6 represents relation between an amount of positional displacement between power reception unit 20 and power transmission unit 56 in the Y-axis direction, and the power transfer efficiency.

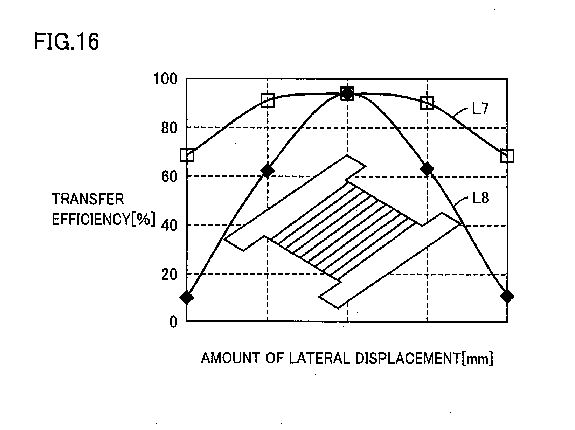

Fig. 16 is a graph showing relation between an amount of positional displacement between power reception unit 20 and power transmission unit 56, and power transfer efficiency, as a comparative example.

Power reception unit 20 according to the comparative example of Fig. 16 includes ferrite core 21 formed to have an H-shape. Specifically, in Fig. 7, stem portion 33 is disposed between magnetic pole portion 34a and magnetic pole portion 34b such that projection length L1 of projecting portions 35b and 36b is equal to projection length L2 of projecting portions 35c and 36c. It is noted that power transmission unit 56 also includes a ferrite core formed to have an H-shape.

In Fig. 16, a curve L7 represents relation between an amount of positional displacement in the X-axis direction and the power transfer efficiency. A curve L8 represents relation between an amount of positional displacement in the Y-axis direction and the power transfer efficiency.

As shown in Figs. 16 and 15, a power transfer characteristic of the power transfer system according to the present embodiment is closely analogous to a power transfer characteristic of the power transfer system according to the comparative example.

This is because, with power reception unit 20 and power transmission unit 56 both including the magnetic pole portions, the magnetic path will be formed between power reception unit 20 and power transmission unit 56 even if power reception unit 20 and power transmission unit 56 are displaced in position relative to each other.

Thus, according to power reception device 11 of the present embodiment, dead space can be effectively utilized, and high power transfer efficiency can be ensured even if a positional displacement occurs.

(Second Embodiment)

Referring to Figs. 17 and 18, as well as Figs. 1 to 16 described above as appropriate, electrically powered vehicle 10 according to a second embodiment is described. It is noted that components shown in Fig. 17 the same as or corresponding to the components shown in Figs. 1 to 16 described above are designated by the same reference characters and description thereof may not be repeated.

It is noted that power reception unit 20 mounted on electrically powered vehicle 10 according to the second embodiment has the same configuration as power reception unit 20 described in the first embodiment above.

Fig. 17 is a plan view schematically showing a position in which power reception unit 20 is mounted. As shown in Fig. 17, secondary coil 22 is disposed such that winding axis O1 extends in a front-rear direction of electrically powered vehicle 10. It is noted that in Fig. 17, an imaginary line passing through the center in the width direction of electrically powered vehicle 10 and extending in the front-rear direction of electrically powered vehicle 10 is defined as a center line 04.

Thus, magnetic pole portions 34a and 34b project from stem portion 33 in the width direction of electrically powered vehicle 10. Here, it is assumed that power reception unit 20 and power transmission unit 56 are displaced in position from each other in the width direction of electrically powered vehicle 10 during electric power transfer.

In this case, power reception unit 20 and power transmission unit 56 are displaced from each other in the X direction in Fig. 9. In Fig. 15, the characteristic of power transfer efficiency when a positional displacement occurs in the X direction is represented by curve L5. As indicated by curve L5, even if power reception unit 20 and power transmission unit 56 are displaced in position from each other in the X direction, the power transfer efficiency does not vary significantly and is maintained at a high level.

Therefore, by disposing power reception unit 20 such that winding axis 01 extends in the front-rear direction of electrically powered vehicle 10 as shown in Fig. 17, high power transfer efficiency can be ensured even if power transmission unit 56 and power reception unit 20 are displaced from each other in the width direction of electrically powered vehicle 10.

Particularly, a positional displacement in the front-rear direction between power reception unit 20 and power transmission unit 56 can be suppressed by providing parking space 52 with a sprag. Meanwhile, a positional displacement in the width direction between power reception unit 20 and power transmission unit 56 is significantly affected by a driver's driving skills.

Thus, power reception unit 20 and power transmission unit 56 may be significantly displaced from each other in the width direction of electrically powered vehicle 10 during electric power transfer. Even in such a case, high power transfer efficiency can be attained in electrically powered vehicle 10 according to the present embodiment.

It is noted that Fig. 16 shows the efficiency when each of power reception unit 20 and power transmission unit 56 employs a core having an asymmetric shape, as shown in Fig. 9.

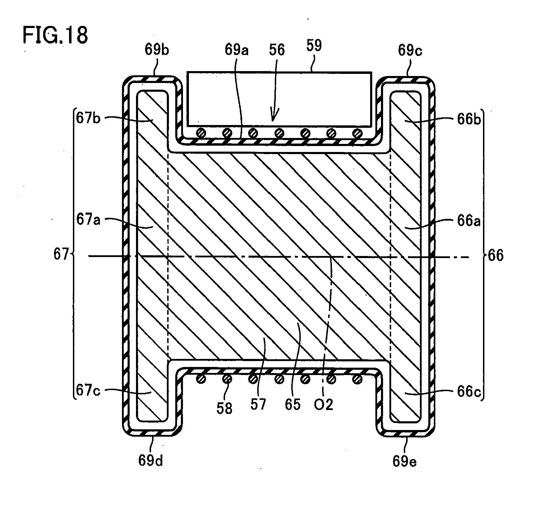

Meanwhile, if power transmission unit 56 shown in Fig. 18 is employed instead of power transmission unit 56 shown in Fig. 9, a characteristic similar to the characteristic shown in Fig. 17 is exhibited.

It is noted that in power transmission unit 56 shown in Fig. 18, each of magnetic pole portion 67 and end portion 66d is formed such that it is symmetric with respect to winding axis 02. Thus, the projection length of projecting portions 67b and 66b from stem portion 65 and the projection length of projecting portions 67c and 66c from stem portion 65 are substantially the same.

Then, as shown in Fig. 17, power transmission unit 56 is disposed such that winding axis 02 passes through the central portion in the width direction of electrically powered vehicle 10 parked properly in the parking space.

In Fig. 17, center line 04 is located to pass through secondary coil 22 when secondary coil 22 is viewed from above electrically powered vehicle 10. In the present embodiment, center line 04 and winding axis O1 are aligned with each other.

That winding axis O1 and center line 04 are aligned with each other includes a complete alignment and a substantial alignment of winding axis O1 and center line 04.

The substantial alignment of winding axis O1 and center line 04 means, for example, that winding axis O1 and center line 04 extend parallel to each other, and if winding axis O1 and center line 04 are spaced apart from each other in the width direction of electrically powered vehicle 10, the distance between winding axis O1 and center line 04 is smaller than, for example, projection length L1 of projecting portion 35b.

The substantial alignment of winding axis O1 and center line 04 also means, for example, if winding axis O1 and center line 04 intersect with each other, the angle of intersection between winding axis O1 and center line 04 is, for example, 10 degrees or less.

When electric power is transferred between power reception unit 20 and power transmission unit 56, an electromagnetic field is formed around power reception unit 20. On the other hand, because power reception unit 20 is positioned in the central portion in the width direction of electrically powered vehicle 10, leakage of the electromagnetic field formed around power reception unit 20 to the area around electrically powered vehicle 10 from the side surface sides of electrically powered vehicle 10 is suppressed.

Particularly, in the example shown in Fig. 17, secondary coil 22 is disposed between rear wheel 19R and rear wheel 19L. Rear wheel 19R and rear wheel 19L suppress the leakage of the electromagnetic field to the area around electrically powered vehicle 10.

Consequently, the effect of the electromagnetic field on electronic devices located around electrically powered vehicle 10 can be reduced.

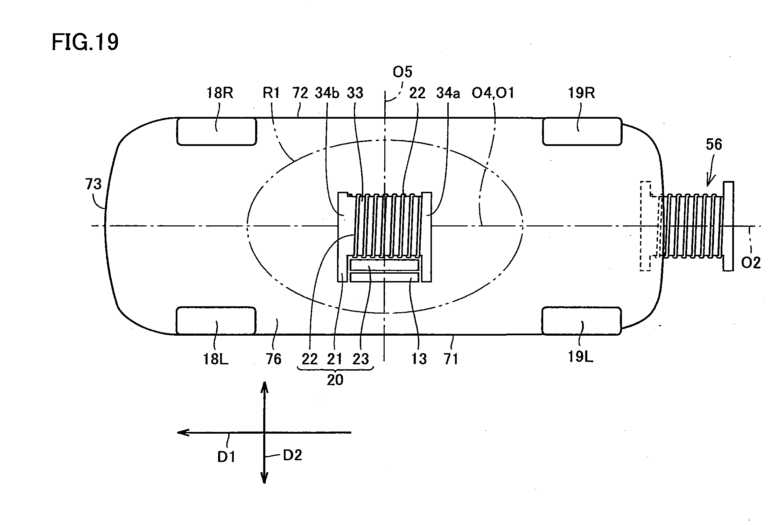

Fig. 19 is a plan view schematically showing a first modification of electrically powered vehicle 10 according to the second embodiment. In Fig. 19, a center line 05 is an imaginary line located in a central portion in the front-rear direction of electrically powered vehicle 10 and extending in the width direction of electrically powered vehicle 10.

In the example shown in Fig. 19, secondary coil 22 is disposed such that winding axis O1 extends in the front-rear direction of electrically powered vehicle 10, and secondary coil 22 is disposed at the center in the front-rear direction of electrically powered vehicle 10.

That secondary coil 22 is positioned in the central portion in the front-rear direction of electrically powered vehicle 10 means that secondary coil 22 is provided at a position through which center line 05 passes when secondary coil 22 is viewed from above electrically powered vehicle 10. Although secondary coil 22 is disposed such that center line 05 passes through the central portion of secondary coil 22 (the central portion in the direction in which winding axis O1 extends) when secondary coil 22 is viewed from above the electrically powered vehicle in the example shown in Fig. 19, the position through which center line 05 passes is not limited to this position. For example, secondary coil 22 may be disposed such that center line 05 passes through a portion close to an end portion of secondary coil 22.

By disposing secondary coil 22 at the center in the front-rear direction of electrically powered vehicle 10, leakage of the electromagnetic field having high strength and formed around secondary coil 22 to the outside can be suppressed.

In Fig. 19, a region R1 represents a region having high strength in the electromagnetic field formed around secondary coil 22 during electric power transfer. Region R1 is distributed wider in the direction in which winding axis O1 extends than in the direction orthogonal to winding axis O1.

Since secondary coil 22 is disposed such that winding axis O1 extends in the front-rear direction of electrically powered vehicle 10, and is disposed at the center in the front-rear direction of electrically powered vehicle 10, the leakage of the electromagnetic field having high strength from the front-rear direction of electrically powered vehicle 10 is suppressed.

Consequently, the effect of the electromagnetic field on electronic devices located around electrically powered vehicle 10 can be reduced.

(Third Embodiment)

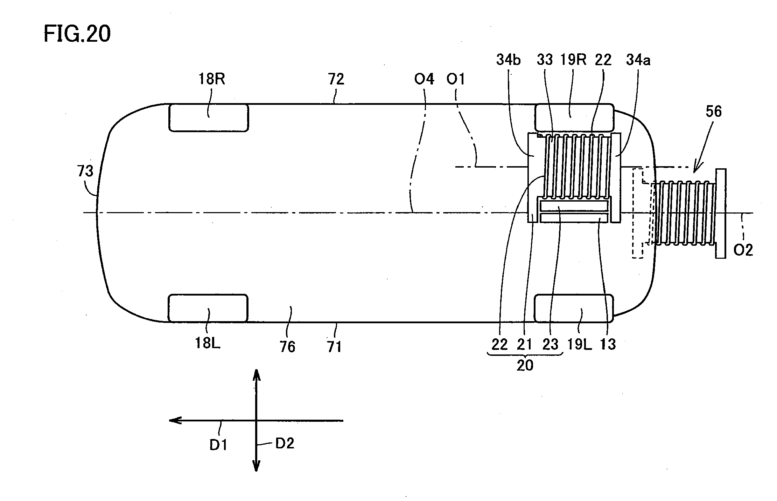

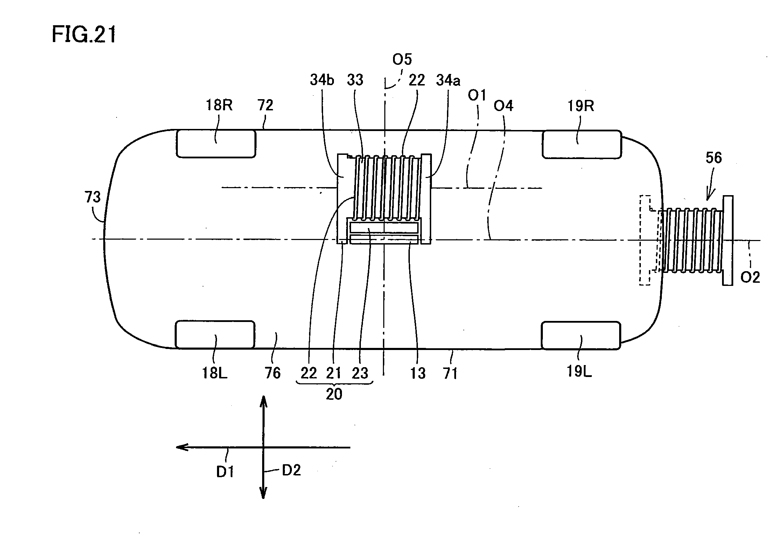

Referring to Figs. 20 and 21, as well as Figs. 1 to 16 described above as appropriate, electrically powered vehicle 10 according to a third embodiment is described. It is noted that components shown in Figs. 20 and 21 the same as or corresponding to the components shown in Figs. 1 to 19 described above are designated by the same reference characters and description thereof may not be repeated.

In the example shown in Fig. 20, secondary coil 22 is again disposed such that winding axis O1 extends in the front-rear direction of electrically powered vehicle 10.

Power reception unit 20 is disposed such that rectifier 13 is positioned at the center in the width direction of electrically powered vehicle 10. That rectifier 13 is positioned at the center in the width direction of electrically powered vehicle 10 means that center line 04 of electrically powered vehicle 10 passes through rectifier 13 when secondary coil 22 is viewed from above electrically powered vehicle 10.

Rectifier 13 includes a plurality of elements such as diodes, and may generate harmonic electromagnetic waves around it when rectifying a current. A harmonic electromagnetic field may significantly affect electronic devices.

In electrically powered vehicle 10 according to the third embodiment, by disposing rectifier 13 at the center in the width direction of electrically powered vehicle 10, leakage of the harmonic electromagnetic waves generated by rectifier 13 to the area around electrically powered vehicle 10 can be suppressed.

Fig. 21 is a plan view schematically showing a modification of electrically powered vehicle 10 according to the second embodiment. In the example shown in Fig. 21, power reception unit 20 is disposed such that rectifier 13 is positioned at the center in the front-rear direction of electrically powered vehicle 10.

That rectifier 13 is positioned at the center in the front-rear direction of electrically powered vehicle 10 means that center line 05 passes through rectifier 13 when rectifier 13 is viewed from above electrically powered vehicle 10.

By disposing rectifier 13 in this manner, the leakage of the harmonic electromagnetic waves to the area around electrically powered vehicle 10 from the front-rear direction of electrically powered vehicle 10 can be suppressed.

(Fourth Embodiment)

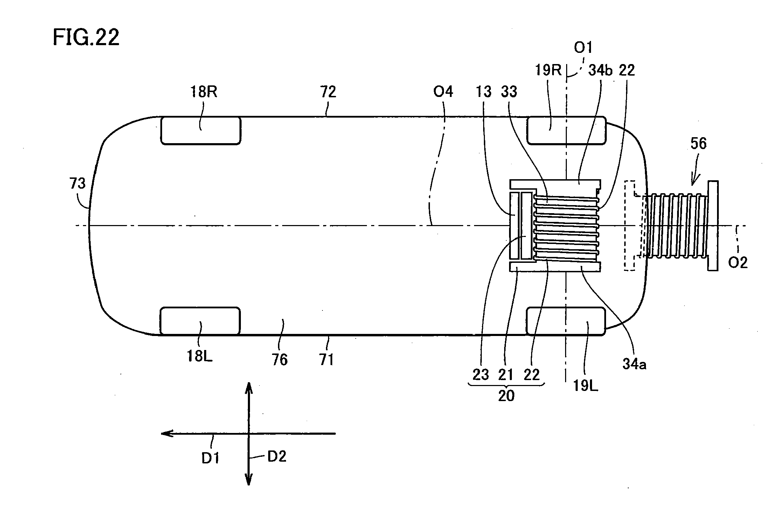

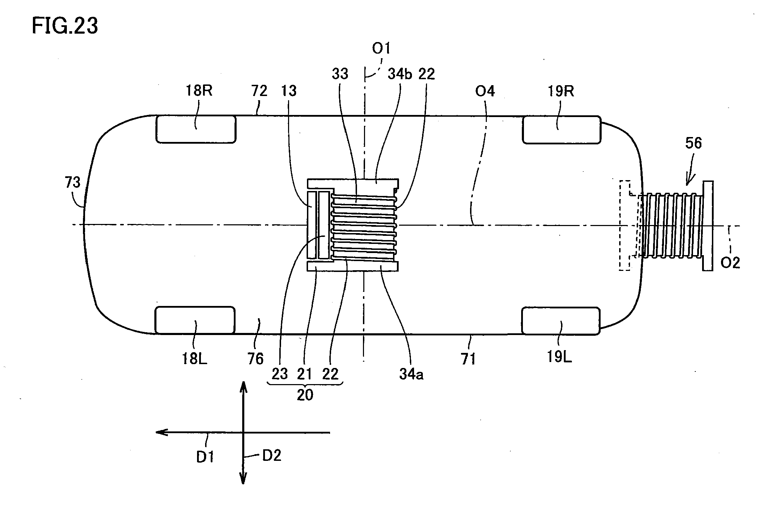

Referring to Figs. 22 and 23, as well as Figs. 1 to 16 as appropriate, electrically powered vehicle 10 according to a fourth embodiment is described. It is noted that components shown in Figs. 22 and 23 the same as or corresponding to the components shown in Figs. 1 to 22 described above are designated by the same reference characters and description thereof may not be repeated.

Fig. 22 is a plan view schematically showing electrically powered vehicle 10 according to a third embodiment. As shown in Fig. 22, secondary coil 22 is disposed so that winding axis O1 extends in the width direction of electrically powered vehicle 10.

Winding axis O1 is located to pass through rear wheel 19R and rear wheel 19L. Magnetic pole portion 34b and magnetic pole portion 34a project from stem portion 33 toward the front or rear of electrically powered vehicle 10. In the example shown in Fig. 22, magnetic pole portion 34a and magnetic pole portion 34b project toward the front of electrically powered vehicle 10.

When power reception unit 20 is disposed in this manner, the characteristic of power transfer efficiency in the front-rear direction of electrically powered vehicle 10 between power reception unit 20 and power transmission unit 56 is represented by curve L5 in Fig. 15. As indicated by curve L5, it can be seen that the power transfer efficiency is maintained at a high level even if power reception unit 20 and power transmission unit 56 are displaced in position from each other in the front-rear direction of electrically powered vehicle 10.

Particularly, if parking space 52 is not provided with a sprag, it is highly likely that power reception unit 20 and power transmission unit 56 will be significantly displaced from each other in the front-rear direction of electrically powered vehicle 10. Even in such a case, high power transfer efficiency can be maintained in electrically powered vehicle 10 according to the present embodiment.

Secondary coil 22 is disposed at the center in the width direction of electrically powered vehicle 10. That secondary coil 22 is disposed at the center in the width direction of electrically powered vehicle 10 means that secondary coil 22 is disposed at a position through which center line 04 passes when secondary coil 22 is viewed from above electrically powered vehicle 10.

Power transmission unit 56 is disposed in the ground beforehand such that primary coil 58 is positioned at the center in the width direction of parked electrically powered vehicle 10 during electric power transfer. By disposing secondary coil 22 at the center in the width direction of electrically powered vehicle 10, therefore, power reception unit 20 and power transmission unit 56 can readily face each other in a vertical direction when electrically powered vehicle 10 is parked. High power transfer efficiency can thus be obtained.

Moreover, by disposing secondary coil 22 at the center in the width direction of electrically powered vehicle 10, leakage of the electromagnetic field formed around secondary coil 22 to the area around electrically powered vehicle 10 can be suppressed.

Particularly, secondary coil 22 is disposed between rear wheel 19R and rear wheel 19L. Rear wheel 19R and rear wheel 19L can thus suppress the leakage of the electromagnetic field having high strength to the area around electrically powered vehicle 10.

Furthermore, by disposing secondary coil 22 at the center in the width direction of electrically powered vehicle 10, rectifier 13 is also positioned at the center in the width direction of electrically powered vehicle 10. Consequently, the leakage of the harmonic electromagnetic waves generated by rectifier 13 to the area around electrically powered vehicle 10 is suppressed.

Fig. 23 is a plan view schematically showing a modification of electrically powered vehicle 10 according to the third embodiment. As shown in Fig. 23, secondary coil 22 is disposed such that winding axis O1 extends in the width direction of electrically powered vehicle 10, and secondary coil 22 is disposed at the center in the front-rear direction of electrically powered vehicle 10.

Consequently, the leakage of the harmonic electromagnetic waves generated by rectifier 13 to the outside from the front-back direction and the width direction of electrically powered vehicle 10 is suppressed.

INDUSTRIAL APPLICABILITY

The present invention is applicable to a power reception device, a power transmission device, and a vehicle.

REFERENCE SIGNS LIST

10 electrically powered vehicle; 11 power reception device; 13 rectifier; 13b, 23a, 59b substrate; 13c, 23c, 59c case; 14 converter; 15 battery; 16 power control unit; 17 motor unit;18L, 18R front wheel; 19L, 19R rear wheel; 20, 96 power reception unit; 21, 57 ferrite core; 22, 58, 94, 99 coil; 23, 59, 95, 98 capacitor; 23b, 59a element; 24, 60 case; 25, 62 shield; 25a top plate portion; 25b, 62b circumferential wall portion; 25c to 25f wall portion; 26 cover portion; 27, 28, 61 fixation member; 29, 32, 64 bus bar; 30,31, 61a, 61b insulation piece; 33, 65 stem portion; 34a, 34a, 34b, 34b, 66, 67 magnetic pole portion; 35a, 36a, 66a, 67a extending portion; 35b, 35c, 36b, 36c, 66b, 66c, 67b, 67c projecting portion; 35d, 35f, 36d, 36f, 66d, 66e, 67d, 67e end portion; 37, 69a coil wound portion; 39,73 recess; 40, 46 insulation member; 41 insulation member for power reception unit; 42 insulation member for device; 43 insulation member for coil; 44 insulation member for capacitor; 47 side member; 49 floor panel; 50, 90 power transmission device; 51 external power feeding device; W1, W2 width.

**Claims**

1. A power reception device comprising:

   a coil (22) that is formed to surround a winding axis (O1) and receives electric power in a non-contact manner from a power transmission unit provided externally; and
   a core (21) having said coil (22) wound therearound,
   said core (21) including

a stem portion (33) extending in a direction in which said winding axis (O1) extends, and having said coil (22) wound therearound, and

a magnetic pole portion (34a, 34b) formed at least at one end portion of said stem portion (33), and extending in an intersecting direction that intersects the direction in which said winding axis (O1) extends,

a width of said stem portion (33) in said intersecting direction being smaller than a length of said magnetic pole portion (34a, 34b) in said intersecting direction,

a first central portion positioned at a center of said magnetic pole portion (34a, 34b) in said intersecting direction and a second central portion positioned at a center of said stem portion (33) in said intersecting direction being displaced from each other in said intersecting direction.

2. The power reception device according to claim 1, further comprising a device connected to said coil (22), wherein said magnetic pole portion (34a, 34b) includes a first end portion and a second end portion arranged in said intersecting direction,

a distance between said stem portion (33) and said first end portion is greater than a distance between said stem portion (33) and said second end portion, and

said device is disposed adjacent to said stem portion (33) and so as to be close to said first end portion.

3. The power reception device according to claim 2, wherein said device is a capacitor (23) connected to said coil (22).

4. The power reception device according to claim 2, wherein said device is a rectifier.

5. The power reception device according to claim 2, wherein said device includes a capacitor (23) connected to said coil (22), and a rectifier connected to said capacitor (23), and said capacitor (23) is adjacent to said stem portion (33), and said rectifier is disposed across said capacitor (23) from said stem portion (33).

6. The power reception device according to claim 1, wherein said stem portion (33) includes a third end portion and a fourth end portion arranged in the direction in which said winding axis (O1) extends, said magnetic pole portion (34a, 34b) includes a first magnetic pole portion connected to said third end portion, and a second magnetic pole portion connected to said fourth end portion, and a central portion of said first magnetic pole portion in said intersecting direction and a central portion of said second magnetic pole portion in said intersecting direction are displaced toward one side of said intersecting direction relative to said second central portion.

7. The power reception device according to claim 1, further comprising a power reception unit including said coil, wherein a difference between a natural frequency of said power transmission unit and a natural frequency of said power reception unit (20) is 10% or less of the natural frequency of said power reception unit (20).

8. The power reception device according to claim 1, further comprising a power reception unit including said coil, wherein a coupling coefficient between said power reception unit (20) and said power transmission unit is 0.1 or less.

9. The power reception device according to claim 1, further comprising a power reception unit including said coil, wherein said power reception unit (20) receives electric power from said power transmission unit through at least one of a magnetic field and an electric field, said magnetic field being formed between said power reception unit (20) and said power transmission unit and oscillating at a specific frequency, said electric field being formed between said power reception unit (20) and said power transmission unit and oscillating at the specific frequency.

10. A power reception device comprising:

a coil (22) that is formed to surround a winding axis (O1) and receives electric power in a non-contact manner from a power transmission unit provided externally; and
a core (21) having said coil (22) wound therearound,
said core (21) including

a stem portion (33) having said coil (22) wound therearound, and
a magnetic pole portion (34a, 34b) formed at least at one end portion of said stem portion (33), and extending in an intersecting direction that intersects the direction in which said winding axis (O1) extends,

a length of said stem portion in said intersecting direction being smaller than a length of said magnetic pole portion in said intersecting direction, said magnetic pole portion being asymmetric with respect to an imaginary plane passing through said winding axis.

11. A vehicle comprising a power reception device, said power reception device including a coil (22) that is formed to surround a winding axis (O1) and receives electric power in a non-contact manner from a power transmission unit provided externally, a core (21) having said coil (22) wound therearound, and a device including a rectifier and connected to said coil (22),
said core (21) including

a stem portion (33) extending in a direction in which said winding axis (O1) extends, and having said coil (22) wound therearound, and
a magnetic pole portion (34a, 34b) formed at an end portion of said stem portion (33), and extending in an intersecting direction that intersects the direction in which said winding axis (O1) extends,

a length of said stem portion (33) in said intersecting direction being smaller than a length of said magnetic pole portion (34a, 34b) in said intersecting direction,
a first central portion positioned at a center of said magnetic pole portion (34a, 34b) in said intersecting direction and a second central portion positioned at a center of said stem portion (33) in said intersecting direction being displaced from each other in said intersecting direction,
said magnetic pole portion (34a, 34b) including a first end portion and a second end portion arranged in said intersecting direction,
a distance between said stem portion (33) and said first end portion being greater than a distance between said stem portion (33) and said second end portion,
said rectifier being disposed adjacent to said stem portion (33) in said intersecting direction, and so as to be closer to said first end portion than to said second end portion,
said rectifier being disposed at a center in a width direction of said vehicle.

12. A vehicle comprising a power reception device, said power reception device including a coil (22) that is formed to surround a winding axis (O1) and receives electric power in a non-contact manner from a power transmission unit provided externally, and a core (21) having said coil (22) wound therearound,
said core (21) including

a stem portion (33) extending in a direction in which said winding axis (O1) extends, and having said coil (22) wound therearound, and
a magnetic pole portion (34a, 34b) formed at an end portion of said stem portion (33), and extending in an intersecting direction that intersects the direction in which said winding axis (O1) extends,

a length of said stem portion (33) in said intersecting direction being smaller than a length of said magnetic pole portion (34a, 34b) in said intersecting direction,
a first central portion positioned at a center of said magnetic pole portion (34a, 34b) in said intersecting direction and a second central portion positioned at a center of said stem portion (33) in said intersecting direction being displaced from each other in said intersecting direction,
said coil (22) being disposed such that said winding axis (O1) extends in a width direction of said vehicle.

13. The vehicle according to claim 12, wherein
assuming that an imaginary line passing through a center in a front-rear direction of said vehicle and extending in the width direction of said vehicle is defined as a first imaginary line, said first imaginary line and said coil (22) overlap with each other when said coil (22) is viewed from above said vehicle.

14. A vehicle comprising a power reception device, said power reception device including a coil (22) that is formed to surround a winding axis (O1) and receives electric power in a non-contact manner from a power transmission unit provided externally, and a core (21) having said coil (22) wound therearound,
said core (21) including

a stem portion (33) extending in a direction in which said winding axis (01) extends, and having said coil (22) wound therearound, and
a magnetic pole portion (34a, 34b) formed at an end portion of said stem portion (33), and extending in an intersecting direction that intersects the direction in which said winding axis (01) extends,

a length of said stem portion (33) in said intersecting direction being smaller than a length of said magnetic pole portion (34a, 34b) in said intersecting direction,
a first central portion positioned at a center of said magnetic pole portion (34a, 34b) in said intersecting direction and a second central portion positioned at a center of said stem portion (33) in said intersecting direction being displaced from each other in said intersecting direction,
said coil (22) being disposed such that said winding axis (O1) extends in a front-rear direction of said vehicle.

15. The vehicle according to claim 14, wherein
assuming that an imaginary line passing through a center in a width direction of said vehicle and extending in the front-rear direction of said vehicle is defined as a second imaginary line, said coil (22) and said second imaginary line overlap with each other when said coil (22) is viewed from above said vehicle.

16. A power transmission device comprising:

a coil (58) that is formed to surround a winding axis (02) and transmits electric power in a non-contact manner to a power reception unit provided in a vehicle; and
a core (57) having said coil (58) wound therearound,
said core (57) including

a stem portion (65) extending in a direction in which said winding axis (02) extends, and having said coil (58) wound therearound, and
a magnetic pole portion (66, 67) formed at least at one end portion of said stem portion (65), and extending in an intersecting direction that intersects the direction in which said winding axis (02) extends,

a width of said stem portion (65) in said intersecting direction being smaller than a length of said magnetic pole portion (66, 67) in said intersecting direction,
a third central portion positioned at a center of said magnetic pole portion (66, 67) in said intersecting direction and a fourth central portion positioned at a center of said stem portion (65) in said intersecting direction being displaced from each other in said intersecting direction.

17. The power transmission device according to claim 16, further comprising a device connected to said coil (58), wherein
said magnetic pole portion (66, 67) includes a fifth end portion and a sixth end portion arranged in said intersecting direction,
a distance between said stem portion (65) and said fifth end portion is greater than a distance between said stem portion (65) and said sixth end portion, and
said device is disposed adjacent to said stem portion (65), and so as to be close to said fifth end portion.

18. The power transmission device according to claim 17, wherein
said device is a capacitor connected to said coil (58).

19. The power transmission device according to claim 16, wherein
said stem portion (65) includes a seventh end portion and an eighth end portion arranged in the direction in which said winding axis (02) extends,
said magnetic pole portion (66, 67) includes a third magnetic pole portion connected to said seventh end portion, and a fourth magnetic pole portion connected to said eighth end portion, and
a central portion of said third magnetic pole portion in said intersecting direction and a central portion of said fourth magnetic pole portion in said intersecting direction are displaced toward one side of said intersecting direction relative to said fourth central portion.

20. A power transmission device comprising:

a coil (58) that is formed to surround a winding axis (02) and transmits electric power in a non-contact manner to a power reception unit provided in a vehicle; and

a core (57) having said coil (58) wound therearound,
said core (57) including

a stem portion (65) having said coil (58) wound therearound, and
a magnetic pole portion (66, 67) formed at least at one end portion of said stem portion (65), and extending in an intersecting direction that intersects the direction in which said winding axis (02) extends,

a length of said stem portion in said intersecting direction being smaller than a length of said magnetic pole portion in said intersecting direction, said magnetic pole portion being asymmetric with respect to an imaginary plane passing through said winding axis.

FIG.1

FIG.2

**FIG.3**

**FIG.4**

## FIG.5

FIG.6

FIG.7

FIG.8

FIG.9

**FIG.10**

**FIG.11**

FIG.12

TRANSFER EFFICIENCY AT CONSTANT FREQUENCY [%]

DEVIATION IN NATURAL FREQUENCY[%]

FIG.13

TRANSFER EFFICIENCY[%]

FIG.14

ELECTROMAGNETIC
FIELD STRENGTH

k1

k2

k3

0

0

DISTANCE FROM ELECTRIC CURRENT SOURCE
(MAGNETIC CURRENT SOURCE)

FIG.15

TRANSFER
EFFICIENCY[%]

L5

L6

AMOUNT OF LATERAL DISPLACEMENT[mm]

## FIG.16

TRANSFER EFFICIENCY[%]

AMOUNT OF LATERAL DISPLACEMENT[mm]

FIG.17

EP 2 858 078 A1

FIG.18

FIG.19

EP 2 858 078 A1

FIG.20

EP 2 858 078 A1

FIG.21

FIG.22

EP 2 858 078 A1

# FIG.23

EP 2 858 078 A1

**INTERNATIONAL SEARCH REPORT**

| International application No. |
|---|
| PCT/JP2012/064389 |

A.   CLASSIFICATION OF SUBJECT MATTER
*H01F38/14*(2006.01)i, *H02J17/00*(2006.01)i

According to International Patent Classification (IPC) or to both national classification and IPC

B.   FIELDS SEARCHED

Minimum documentation searched (classification system followed by classification symbols)
H01F38/14, H02J17/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>A | JP 10-108373 A  (Sumitomo Wiring Systems, Ltd.),<br>24 April 1998 (24.04.1998),<br>claims; paragraphs [0006] to [0011]; fig. 1 to 4<br>& JP 10-106865 A          & US 5917307 A<br>& EP 817212 A1            & CN 1185677 A | 1,10,16,20<br>2-9,11-15,<br>17-19 |
| X<br>A | JP 2011-167020 A  (Saitama University),<br>25 August 2011 (25.08.2011),<br>paragraphs [0023] to [0025]; fig. 1, 3<br>& JP 2005-53776 A          & US 2011/0009254 A1<br>& EP 1505041 A1            & DE 10336913 A | 1,6,10,12-15<br>2-5,7-9,11,<br>16-20 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>28 August, 2012 (28.08.12) | Date of mailing of the international search report<br>04 September, 2012 (04.09.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2012/064389 |

C (Continuation). DOCUMENTS CONSIDERED TO BE RELEVANT

| Category* | Citation of document, with indication, where appropriate, of the relevant passages | Relevant to claim No. |
| --- | --- | --- |
| X<br><br>A | JP 2012-23913 A (Shigeo HAMAGUCHI, Misuzu Industry Co., Ltd.),<br>02 February 2012 (02.02.2012),<br>paragraphs [0025], [0040] to [0053], [0064];<br>fig. 1, 2<br>(Family: none) | 1,6-10,<br>12-16,19,20<br>2-5,11,17,18 |
| A | JP 2010-268660 A (Toyota Motor Corp.),<br>25 November 2010 (25.11.2010),<br>entire text; all drawings<br>(Family: none) | 1-20 |
| A | JP 2011-50127 A (Saitama University),<br>10 March 2011 (10.03.2011),<br>entire text; all drawings<br>(Family: none) | 1-20 |
| A | Shigeru ABE, Hiroyoshi KANEKO(Saitama University), "Denki Jidosha-yo Hi Sesshoku Kyuden no Gijutsu Doko", National Convention Record, I.E.E. Japan, Industry Applications Society, vol.2011(CD-ROM), 06 September 2011 (06.09.2011), page ROMBUNNO.2-S11-6 | 1-20 |

Form PCT/ISA/210 (continuation of second sheet) (July 2009)

**EP 2 858 078 A1**

**Patent documents cited in the description**

• JP 2011050127 A